# EUROPÄISCHE PATENTSCHRIFT

(11) **EP 4 452 557 B1**
(45) Veröffentlichungstag und Bekanntmachung des Hinweises auf die Patenterteilung: **18.03.2026**
(21) Anmeldenummer: 22843768.7
(22) Anmeldetag: 22.12.2022
(51) Int. Cl.: B24D 15/02, G10D 3/06, G10D 3/22, B23D 71/10

(54) **FEILE ZUR ERZEUGUNG EINER UNEBENEN KONTUR, INSBESONDERE MIT EINER QUERKRÜMMUNG**
FILE FOR CREATING A NON-PLANAR CONTOUR, IN PARTICULAR WITH TRANSVERSE CURVATURE
LIME POUR CRÉER UN CONTOUR NON PLAN, PRÉSENTANT EN PARTICULIER UNE COURBURE TRANSVERSALE

(30) Priorität: 23.12.2021 DE 102021215021
(43) Veröffentlichungstag der Anmeldung: 30.10.2024
(60) Teilanmeldung: 26152795.6
(73) Patentinhaber: Ertl, Lothar, 90762 Fürth (DE)
(72) Erfinder: Ertl, Lothar, 90762 Fürth (DE)
(74) Vertreter: Rau, Schneck & Hübner Patentanwälte Rechtsanwälte PartGmbB
(86) Internationale Anmeldenummer: PCT/EP2022/087527
(87) Internationale Veröffentlichungsnummer: WO 2023/118459

(56) Entgegenhaltungen:
- US-A- 1 742 070
- US-A- 5 895 316
- US-A1- 2013 125 731
- US-A1- 2014 199 919
- US-A1- 2020 282 519

## Beschreibung

Die Erfindung betrifft eine Feile zur Erzeugung einer unebenen Kontur, insbesondere mit einer Querkrümmung an einem Werkstück, gemäß dem Oberbegriff des Anspruchs 1. Ein Beispiel einer solchen Feile ist aus der US 2014/199919 A1 bekannt.

Bei der Herstellung eines Saiteninstruments, insbesondere eines Zupfinstruments mit einem Griffbrett, werden auf dem Griffbrett in Abhängigkeit von der Mensur in bestimmten gleichmäßig zum Steg hin zueinander abnehmenden Abständen sogenannte Bundstäbe angebracht, um durch das Drücken von Saiten beim Zupfinstrumentenspiel bestimmte Tonhöhen zu bestimmen. Als Mensur wird die Länge einer freischwingenden Saite zwischen einem Sattel am oberen Ende des Griffbretts und einer Stegeinlage im Steg auf der Resonanzdecke des Instruments verstanden. Der Abstand von dem Sattel zum ersten Bund ergibt sich aus der Division der Länge der Mensur mit dem Divisor von 17,817. Dieser Abstand wird von der Mensur subtrahiert und das Ergebnis wieder durch denselben Divisor von 17,817 dividiert. Dadurch ergibt sich der Abstand von dem ersten Bund zum zweiten Bund. Die weiteren Abstände können entsprechend berechnet werden. Die Bundstäbe sind stabförmig ausgeführt, werden im Griffbrett befestigt, d. h. an bestimmten Stellen bis auf ihre quergekrümmten Bereiche im Griffbrett versenkt und anschließend abgerichtet, damit die Bundstäbe entlang des Griffbretts nicht unterschiedlich weit vorstehen. In Folge des Abrichtens werden die ursprünglich runden Außenkonturen der Bundstäbe beeinträchtigt. Das nachträgliche Wiederherstellen der runden Außenkonturen unter Beibehaltung der durch den Abrichtprozess erzeugten Bundstabniveaus ist aufwändig, kompliziert, jedoch unbedingt erforderlich, damit einerseits unerwünschte Schnarrgeräusche vermieden werden und andererseits die durch die lotrecht zum Griffbrett verlaufenden Querschnittsmitten der Bundstäbe und die jeweils dadurch definierten Tonhöhen erhalten bleiben. Jede Unterschreitung der durch den Abrichtprozess erzeugten Bundstabhöheniveaus muss vermieden werden.

US 2014/199919 A1 und US 2013/0 125 731 A1 offenbaren Feilen für das Bearbeiten von Bundstäben.

US 2020/0 282 519 A1 offenbart ein Feilenwerkzeug für die Bearbeitung von Bundstäben eines besaiteten Instruments.

US 5,895,316 offenbart ein Schleifgerät. US 1,742,070 offenbart ein Poliergerät.

Der Erfindung liegt die Aufgabe zugrunde, die Erzeugung einer unebenen Kontur, insbesondere mit einer Querkrümmung, an einem, insbesondere bundstabartigen, Werkstück unter Einhaltung eines am Werkstück bereits erzeugten Höhenniveaus zu vereinfachen.

Diese Aufgabe wird gelöst durch eine Feile mit den im Anspruch 1 genannten Merkmalen. Es ist bekannt, dass die Feile mindestens ein Feilenelement mit einer abrasiven Bearbeitungsoberfläche und ein Tiefenstoppelement mit einer nicht-abrasiven Gleitoberfläche aufweist.

Dadurch, dass bei der erfindungsgemäßen Feile die nicht-abrasive Gleitoberfläche vorgesehen ist, ist gewährleistet, dass bei einer spanenden Bearbeitung des Werkstücks unerwünschter Materialabtrag in diesem Bereich verhindert wird. Der nicht-abrasive Bereich der Feile dient als Tiefenstopp.

Dadurch wird bei einem in einem Griffbrett verankerten Bundstab verhindert, dass die durch einen Abrichtprozess erzeugte Bundstabhöhe unbeabsichtigt vermindert wird. Aufgrund des mindestens einen abrasiven Feilenelements ist eine Bearbeitung der übrigen Kontur des Bundstabes aber möglich. Ein derartiger Bundstab bildet ein Werkstück, das mit der Feile bearbeitbar ist. Der Bundstab weist insbesondere ursprünglich eine verrundete Außenkontur auf, die infolge des Abrichtens beeinträchtigt, insbesondere abgeflacht wird. Die erfindungsgemäße Feile ermöglicht es, eine unebene Kontur herzustellen, insbesondere mit einer Verrundung und/oder einer Querkrümmung. Insbesondere ist die erzeugbare Kontur des Werkstücks in Abhängigkeit der Kontur der Bearbeitungsoberfläche veränderlich festlegbar. In einer Ebene senkrecht zur Längsachse des Werkstücks ist die Kontur insbesondere ein Spline n-ten Grades, insbesondere ein Spline 4-ten Grades.

Das zu bearbeitende Werkstück kann ursprünglich auch eine polygonale Außenkontur, insbesondere einen dreieckförmigen Querschnitt, aufweisen.

Die Feile kann auch mehrere, insbesondere mindestens zwei und insbesondere genau zwei, Feilenelemente umfassen. Die Feile kann auch mehrere Tiefenstoppelemente umfassen. Es können mehrere Feilenelemente und/oder mehrere Tiefenstoppelemente miteinander zu der Feile mit Tiefenstoppfunktion kombiniert sein.

Das mindestens eine Feilenelement und das mindestens eine Tiefenstopp-element sind insbesondere lösbar miteinander verbunden. Ein Austausch des mindestens einen Feilenelements und/oder des mindestens einen Tiefenstoppelements ist dadurch verbessert. Es ist alternativ möglich, dass das mindestens eine Feilenelement und das mindestens eine Tiefenstoppelement unlösbar miteinander verbunden sind. Unlösbar bedeutet, dass eine Trennung der Elemente nur zerstörend möglich ist. Die Feile ist bei einer unlösbaren Verbindung der Elemente besonders robust ausgeführt.

Das mindestens eine Feilenelement ist insbesondere jeweils aus einem Werkzeugwerkstoff hergestellt, insbesondere aus Stahl und insbesondere aus einem Werkzeugstahl. Es kommen auch andere Werkzeugwerkstoffe in Betracht, insbesondere Aluminiumwerkstoffe. Die abrasive Bearbeitungsoberfläche ist insbesondere mit einer Diamantbeschichtung und/oder Saphirbeschichtung versehen. Die abrasive Bearbeitungsoberfläche kann aber auch durch andere Beschichtungsarten ausgeführt sein und zusätzlich oder alternativ eine Oberflächenstrukturierung aufweisen, insbesondere mit regelmäßig oder unregelmäßig angeordneten Erhebungen und Vertiefungen. Insbesondere ist die abrasive Bearbeitungsoberfläche gehauen und insbesondere handgehauen.

Das mindestens eine Tiefenstoppelement ist insbesondere aus einem hochfesten Werkstoff hergestellt, insbesondere aus einem hochfesten, spanbaren Hochleistungs- und/oder Konstruktionskunststoff, wie insbesondere Polyetheretherketon (PEEK), Polyphenylensulfid (PPS) oder Polyimid (PI).

Die nicht-abrasive Gleitoberfläche ist dadurch ausgeführt, dass sie insbesondere frei von abrasiven Beschichtungen ist und insbesondere durch einen Grundwerkstoff des Tiefenstoppelements gebildet ist. Der Grundwerkstoff des Tiefenstoppelements kann einen Schichtwerkstoff wie beispielsweise TiAlN aufweisen. Die nicht-abrasive Bearbeitungsoberfläche ist glatt ausgeführt. Die Gleitoberfläche kann geschliffen und/oder poliert sein. Die Gleitoberfläche weist einen arithmetischen Mittenrauwert Ra von höchstens 0,4 µm, insbesondere von höchstens 0,2 µm, insbesondere von höchstens 0,1 µm, insbesondere von höchstens 0,05 µm und insbesondere von höchstens 0,025 µm auf.

Die beiden außenliegenden Feilenelemente sind insbesondere identisch ausgeführt und bezüglich einer die Längsachse des Feilengrundkörpers aufweisenden Mittenebene spiegelsymmetrisch zueinander angeordnet. Die Herstellung der Feile ist dadurch vereinfacht, da lediglich zwei unterschiedliche Feilenelemente bereitgestellt werden müssen, um den Feilengrundkörper herzustellen.

Dadurch, dass das mindestens eine Feilenelement und das Tiefenstoppelement in einer zur Längsachse senkrecht orientierten Ebene nebeneinander angeordnet sind, ist die Bearbeitung der Bundstäbe vereinfacht. Die Feile kann mit dem mindestens einen Feilenelement unmittelbar auf den Bundstab aufgesetzt und der Bundstab dadurch bearbeitet werden. Das Tiefenstoppelement verhindert eine unbeabsichtigte Bearbeitung des Bundstabes in Tiefenrichtung, indem das Tiefenstoppelement entweder unmittelbar am zu bearbeitenden Bundstab oder an einem seitlich benachbarten Bundstäben aufliegt. Insbesondere sind das mindestens eine Feilenelement und das Tiefenstoppelement im Wesentlichen parallel zueinander entlang der Längsachse und insbesondere parallel zueinander entlang der Längsachse orientiert. Das mindestens eine Feilenelement und das Tiefenstoppelement sind mit einem Abstand, insbesondere mit einem senkrecht zur Längsachse orientierten Abstand zueinander in der senkrecht zur Längsachse orientierten Ebene angeordnet.

Die Feile, bei der das Tiefenstoppelement einen Feilengrundkörper bildet, an dem mindestens eine Vertiefung zum Einsetzen des mindestens einen Feilenelements angeordnet ist, ermöglicht ein vorteilhaftes Reparieren einzelner Bundstäbe, die niveauerhaltend verrundet werden können, ohne dass alle, insbesondere benachbarte Bundstäbe, ebenfalls vorher abgerichtet werden müssen. Es wurde erkannt, dass es vorteilhaft ist, wenn die Gleitoberfläche des Tiefenstoppelements außerhalb des zu bearbeitenden Bundstabes und insbesondere im Bereich benachbarter Bundstäbe angeordnet sein kann. Die Ausgestaltung und Konstruktion der Feile ist dadurch vereinfacht. Der Herstellungsaufwand ist reduziert. Das Tiefenstoppelement bildet einen Feilengrundkörper mit mindestens einer Vertiefung, in die das mindestens eine Feilenelement eingesetzt ist. Insbesondere ist das mindestens eine Feilenelement an einer Unterseite des Feilengrundkörpers eingelassen. Das mindestens eine Feilenelement ist als Hohlfeile ausgeführt.

Der Feilengrundkörper ist insbesondere präzise gefertigt, insbesondere feingefräst, insbesondere geschliffen, insbesondere poliert mit ebener, gleitfähiger Unterseite, die die Gleitoberfläche bildet. Die Gleitoberfläche wird auch Gleitfläche genannt. In einer von den lokalen Querschnittmaxima der einzelnen Bundstäbe definierten Ebene erstreckt sich der Feilengrundkörper entlang einer Feilengrundkörperlänge, die insbesondere größer ist als die Summe der beiden Abstände zwischen zwei benachbarten Bundstäben auf dem Griffbrett. Insbesondere ist der Feilengrundkörper derart dimensioniert, dass er zu Beginn der Bearbeitung zunächst an mindestens einem oder mehreren benachbart zu dem bearbeiteten Bundstab angeordneten Bundstab aufliegt. Zu Beginn der spanenden Bearbeitung wird die Gleitoberfläche, insbesondere im Falle eines nicht federnd gelagerten Feilenelements, zunächst ausschließlich auf dem Bundstab aufliegen, der mit der Gleitoberfläche gerade noch erreicht werden kann. Dadurch, dass die Gleitoberfläche während der Bearbeitung des Bundstabes und insbesondere gegen Ende der Bearbeitung auf mindestens zwei benachbarten Bundstäben aufliegt und insbesondere gleitend in Arbeitsrichtung bewegt wird, ist ein unerwünschter Materialabtrag zuverlässig verhindert.

Es ist insbesondere denkbar, dass an dem Feilengrundkörper zwei Feilenelemente angeordnet sind. Die Feilenelemente können insbesondere eine im Wesentlichen identische Geometrie, aber unterschiedliche Körnungen aufweisen. Eine derartige Feile vereinfacht die Bearbeitung des Werkstücks, indem beispielsweise zunächst mit dem Feilenelement gröberer Körnung vorgearbeitet und anschließend mit dem Feilenelement feinerer Körnung nachgearbeitet wird. Es ist auch denkbar, zwei Feilenelemente identischer Körnung vorzusehen, sodass die Feile auch dann weiterhin einsetzbar ist, wenn eines der beiden Feilenelemente abgenutzt, beschädigt und/oder zerstört ist.

Die erfindungsgemäße Feile, bei der das mindestens eine Feilenelement in Tiefenrichtung mechanisch vorgespannt, insbesondere mittels einer Druckfeder, am Feilengrundkörper angeordnet ist, ermöglicht unkompliziert einen automatisierten Ausgleich von Fertigungstoleranzen, die insbesondere bei dem Feilenelement auftreten können, insbesondere wenn das Feilenelement mit einer Diamantbeschichtung versehen ist.

Die erfindungsgemäße Feile, bei der das mindestens eine Feilenelement zusätzlich oder alternativ zur mechanischen Vorspannung in Tiefenrichtung verstellbar, insbesondere mittels eines Bewegungsgewindes, insbesondere mittels eines Bewegungsfeingewindes, am Feilengrundkörper angeordnet ist, ermöglicht das gezielte Positionieren des mindestens einen Feilenelements gegenüber dem Feilengrundkörper durch Feinjustage.

Eine Feile gemäß Anspruch 2 gewährleistet eine stabile Konstruktion des Feilengrundkörpers. Die Fertigung und Herstellung der Feile ist vereinfacht. Das mindestens eine Feilenelement und das Tiefenstoppelement können unabhängig voneinander hergestellt und insbesondere die Bearbeitungsoberfläche ausgeführt werden. Das mindestens eine Feilenelement wird nach seiner Herstellung mit einem anderen Feilenelement und/oder mit dem Tiefenstoppelement verbunden, insbesondere fest miteinander verbunden. Die Verbindung kann lösbar, insbesondere durch Schrauben oder Klemmen, erfolgen. Die Verbindung kann auch unlösbar ausgeführt sein, beispielsweise durch Kleben, Löten oder Schweißen. Das Kleben erfolgt insbesondere mittels eines ZweiKomponenten-Konstruktionsklebstoffs auf Epoxidharzbasis.

Insbesondere kann die Verbindung der Feilenelemente miteinander, insbesondere zusätzlich, durch Formschluss verbessert werden, indem beispielsweise die Feilenelemente nach einem Nut-Feder-Prinzip entlang der Längsachse der Feile oder mit einem Neigungswinkel bezüglich der Längsachse aufeinander aufgeschoben werden.

Eine Feile gemäß Anspruch 3 vereinfacht die Herstellung der Querkrümmung an dem Werkstück. Die abrasive Bearbeitungsoberfläche ist insbesondere im Wesentlichen durchgängig konkav ausgeführt und insbesondere weist sie durchgängig eine Krümmung, insbesondere eine konstante Krümmung, auf. Dies ermöglicht bei feilenden Bewegungen zur Wiederherstellung der Querkrümmung und insbesondere einer Verrundung zu einer symmetrischen Selbstjustierung der Feile. Das Lot durch das lokale Maximum der originalen Verrundung auf das Griffbrett und das Lot durch die Mitte des abgeflachten Werkstücks auf das Griffbrett tendieren zur Deckungsgleichheit. Vorteilhaft ist es, wenn ein Krümmungsradius der abrasiven Bearbeitungsoberfläche größer ist als der originale Krümmungsradius des Werkstücks.

Insbesondere ist die Krümmung der abrasiven Bearbeitungsoberfläche als Kreissegment ausgeführt und weist einen Öffnungswinkel gegenüber dem Mittelpunkt von mindestens 30°, insbesondere mindestens 35°, insbesondere mindestens 40°, insbesondere mindestens 45°, insbesondere mindestens 50° und insbesondere mindestens 60° und insbesondere höchstens 85° auf.

Es ist zusätzlich oder alternativ möglich, dass die konkave, abrasive Bearbeitungsoberfläche ohne kontinuierliche Krümmung ausgeführt ist. Als vorteilhaft hat sich erwiesen, wenn für die konkave Kontur zumindest eines der nachfolgenden Kriterien erfüllt ist und insbesondere sämtliche der nachfolgend genannten Kriterien erfüllt sind. Ein erstes Kriterium betrifft einen seitlichen Abstand der beiden axial verlaufenden Randbereiche der Bearbeitungsoberfläche. Dieser Abstand muss größer sein als die Breite des Bundstabs. Ein zweites Kriterium betrifft die Symmetrie der konkaven Kontur. Die Kontur hat die Eigenschaften einer geraden reellen Funktion. Das bedeutet, dass die konkave Kontur bezüglich einer Symmetrieebene spiegelsymmetrisch ausgeführt ist, wobei die Symmetrieebene senkrecht zur Breitenrichtung des Bundstabes orientiert ist und die Längsachse der Feile umfasst. Die Herstellung des Bundstabes ist mit verbesserter Bund-reinheit möglich. In einem zentralen Bereich der konkaven Kontur kann diese vergleichsweise spitz ausgeführt sein. Ein drittes Kriterium betrifft die Anordnung des lokalen Maximums des Bundstabes. Nach vollständiger Verrundung des Bundstabes muss dessen lokales Maximum näher an den axial verlaufenden Randbereichen der Feilenelemente angeordnet sein als an der Oberfläche des Bundstabes. Das bedeutet, dass der Abstand in Tiefenrichtung vom Maximum des Bundstabes zur Unterseite des Feilenelements kleiner ist als der Abstand in Tiefenrichtung des lokalen Maximums des Bundestabes zu der Oberfläche des Griffbretts.

Die Bearbeitungsoberfläche ist insbesondere zumindest abschnittsweise konkav ausgeführt. Beispielsweise kann die Kontur auch abschnittsweise konvex ausgeführt sein, insbesondere in Form einer Glockenkurve. Eine Glockenkurve weist insbesondere mehrere, insbesondere zwei, Wendepunkte auf. Vorteilhaft ist es, wenn der konkave Verlauf seitlich durch parallele Randbereiche ohne scharfkantige, also unstetige, Absätze begrenzt ist.

Zusätzlich oder alternativ kann die Bearbeitungsoberfläche auch derart konvex ausgeführt sein, dass im Wesentlichen eine V-förmige Vertiefung vorgesehen ist, wobei die Vertiefung im Grund abgerundet ist. Die Herstellung einer derartigen Vertiefung ist unkompliziert.

Eine Feile gemäß Anspruch 4 ist robust ausgeführt und vorteilhaft, nämlich vereinfacht, herstellbar.

Eine Feile gemäß Anspruch 5 ist vorteilhaft in der Handhabung, robust ausgeführt und ermöglicht eine unkomplizierte Herstellung des Feilengrundkörpers.

Eine Feile gemäß Anspruch 6 gewährleistet eine zuverlässige Befestigung des Feilenelements am Feilengrundkörper. Ein Halteelement ermöglicht das Halten des Feilenelements durch Formschluss und/oder durch Kraftschluss. Insbesondere ist das Haltelement als Schraube, insbesondere als Klemmschraube, insbesondere in Form einer Kugelkopfschraube, als Durchsteckschraube oder als Bewegungsschraube, insbesondere mit einem Bewegungsgewinde, ausgeführt.

Eine Feile gemäß Anspruch 7 ermöglicht eine zuverlässige Halterung des mindestens einen Feilenelements. Vorteilhaft ist es, wenn das mindestens eine Feilenelement mehrere, insbesondere genau zwei, Haltenuten aufweist. Daraus ergeben sich insbesondere Vorteile bezüglich der Feinjustierung der Feilenelemente an dem Feilengrundkörper.

Eine Feile gemäß Anspruch 8 verhindert ein unbeabsichtigtes Verlieren des mindestens einen Feilenelements und bewirkt insbesondere ein zuverlässiges Klemmen des mindestens einen Feilenelements mittels des Halteelements.

Eine Feile gemäß Anspruch 9 ermöglicht eine axiale Fixierung des Feilenelements mittels des Halteelements.

Eine Feile gemäß Anspruch 10 ermöglicht eine vorteilhafte Werkstückbearbeitung. Eine Anordnung des mindestens einen Feilenelements gegenüber dem Feilengrundkörper derart, dass ein Tiefpunkt der Bearbeitungsoberfläche gegenüber einer von der Gleitoberfläche definierten Ebene in Tiefenrichtung zurückversetzt angeordnet ist, gewährleistet in vorteilhafter Weise, dass an dem zu bearbeitenden Bundstab ein Materialüberstand nach der Bearbeitung verbleibt. Die zurückversetzte Anordnung eignet sich deshalb insbesondere für eine Feile, bei der das mindestens eine Feilenelement eine vergleichsweise große Rautiefe aufweist, also für eine Vor- bzw. Grobbearbeitung dient. Entsprechend ist eine Anordnung des Tiefpunkts in der Ebene der Gleitoberfläche für eine Feile mit feiner bzw. kleiner Rautiefe vorteilhaft, die insbesondere für eine Nachbearbeitung, insbesondere eine Endbearbeitung oder Feinbearbeitung verwendet werden soll. Da-durch kann der Bundstab mit der Nachbearbeitungs-Feile entlang seiner, insbesondere gesamten, Länge so bearbeitet werden, dass sein lokales Querschnittsmaximum in der durch die Gleitoberfläche bestimmten Ebene angeordnet ist.

Die Herstellung eines Feilenelements gemäß Anspruch 13 ist besonders kosteneffizient möglich. Es wurde gefunden, dass die verschiedenen Funktionen, die das Feilenelement erfüllt, voneinander getrennt werden können. Die Haltefunktion des Feilenelements wird insbesondere durch ein Feilenhalteelement erfüllt. Das Feilenhalteelement kann vorteilhaft am Feilengrundkörper gehalten und daran befestigt werden. Insbesondere ist das Feilenhalteelement mit entsprechenden konstruktiven Merkmalen für die Halterung und/oder Befestigung an dem Feilengrundkörper ausgestaltet. Es wurde insbesondere gefunden, dass es nicht erforderlich ist, dass das Feilenhalteelement aus einem Material mit einer abrasiven Oberfläche, wie beispielsweise mit einer Diamantbeschichtung, ausgeführt sein muss. Das Feilenhalteelement kann aus einem vergleichsweise kosteneffizienten und/oder aus einem vergleichsweise mechanisch gut bearbeitbaren Werkstoff hergestellt sein.

Insbesondere ist an und/oder in dem Feilenhalteelement ein Feileneinsatzelement gehalten und/oder daran befestigt. Das Feileneinsatzelement weist die abrasive Oberfläche auf, die zur Werkstückbearbeitung dient. Da das Feileneinsatzelement von dem Feilenhalteelement gehalten ist, sind besondere konstruktive Merkmale an dem Feileneinsatzelement entbehrlich. Das Feileneinsatzelement kann mit einer vergleichsweise unkomplizierten Geometrie ausgeführt und dadurch kosteneffizient hergestellt werden. Für das Feileneinsatzelement kann ein besonderes Material, insbesondere mit Diamantbeschichtung, verwendet werden.

Eine Feile g, bei der das mindestens eine Feilenelemenrt einen Feilengrundkörper bildet, an dem das Tiefenstoppelement befestigt ist, insbesondere in eine Vertiefung eingesetzt, wobei insbesondere die nicht-abrasive Gleitoberfläche zumindest abschnittsweise konvex ausgeführt ist und insbesondere ein, insbesondere lokales, Extremum, insbesondere ein Maximum aufweist, wobei insbesondere das Extremum einen Tiefenabstand aufweist, der senkrecht zu einer virtuellen Verbindungslinie orientiert ist, die durch einander zugewandte Konturenendpunkte der abrasiven Bearbeitungsoberfläche festgelegt ist, und/oder wobei insbesondere die Kontur der nicht-abrasiven Gleitoberfläche eine senkrecht zur Längsachse orientierte Breite aufweist, die höchstens 0,3 mm, insbesondere höchstens 0,2 mm, insbesondere höchstens 0,15 mm und insbesondere zwischen 0,01 mm und 0,1 mm beträgt, ermöglicht eine zuverlässige Tiefenstoppfunktion. Dadurch, dass die Kontur der nicht-abrasiven Bearbeitungsoberfläche zumindest abschnittsweise konvex ausgeführt ist, ist an dem mittleren Feilenelement ein Vorsprung ausgeführt, der insbesondere gegenüber den abrasiven Bearbeitungsoberflächen vorsteht. Die Kontur der Bearbeitungsoberfläche im nicht-abrasiven Bereich weist also insbesondere ein lokales Extremum, insbesondere ein lokales Maximum auf.

Insbesondere sind die außenliegenden Feilenelemente an dem Feilengrundkörper derart angeordnet, dass die beiden Krümmungen einen gemeinsamen Krümmungsmittelpunkt aufweisen, also eine gemeinsame Krümmung bilden, die insbesondere lediglich durch das Tiefenstoppelement unterbrochen ist.

Eine Feile, bei der das Extremum einen Tiefenabstand aufweist, der senkrecht zu einer virtuellen Verbindungslinie orientiert ist, die durch einander zugewandte Konturendpunkte der abrasiven Bearbeitungsoberflächen festgelegt ist, gewährleistet, dass ein unbeabsichtigter Materialabtrag zuverlässiger verhindert ist. Der Tiefenabstand beträgt insbesondere mindestens 0,02 mm, insbesondere mindestens 0,04 mm und insbesondere mindestens 0,05 mm. Insbesondere beträgt der Tiefenabstand bezogen auf eine senkrecht zur Längsachse und insbesondere senkrecht zur Mittenebene des Feilengrundkörpers orientierte Breite zwischen der Hälfte und dem Fünffachen der Breite.

Eine Feile, bei der die Kontur der nicht-abrasiven Gleitoberfläche eine senkrecht zur Längsachse orientierte Breite von höchstens 0,3 mm aufweist, gewährleistet, dass bei einer Neigung der Feile gegenüber dem Werkstück unerwünschter Materialabtrag vermieden wird. Die Breite beträgt insbesondere zwischen 0,01 mm und 0,1 mm.

Sowohl die in den Patentansprüchen angegebenen Merkmale als auch die in der nachfolgenden Beschreibung von Ausführungsformen erfindungsgemäßer Feilen angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung von Ausführungsbeispielen anhand der Zeichnung. Es zeigen:
- Fig. 1: einen Querschnitt durch eine nicht-erfindungsgemäße Feile in einer Ebene senkrecht zu einer Längsachse eines Feilengrundkörpers,
- Fig. 2: eine vergrößerte Detailansicht des Details II in Fig. 1,
- Fig. 3: eine Draufsicht auf eine erfindungsgemäße Feile , bei der der Feilengrundkörper ein Tiefen-stoppelement bildet,
- Fig. 4: eine Schnittdarstellung gemäß Schnittlinie IV-IV in Fig. 3,
- Fig. 5: eine Seitenansicht der Feile in Fig. 3 und 4,
- Fig. 6: eine Seitenansicht eines Feilenelements der Feile in Fig. 3,
- Fig. 7: eine Schnittdarstellung gemäß Schnittlinie VII-VII in Fig. 6,
- Fig. 8: eine Ansicht von unten auf eine Feile gemäß einem weiteren Ausführungsbeispiel,
- Fig. 9: eine Schnittansicht gemäß Schnittlinie IX-IX in Fig. 8,
- Fig. 10: eine Seitenansicht einer Feile gemäß einem weiteren Ausführungsbeispiel mit Durchsteckschraube,
- Fig. 11: eine Seitenansicht eines Feilenelements der Feile in Fig. 10 mit demontierter Schraube und Feilenelement,
- Fig. 12: eine vergrößerte Schnittansicht einer Feile gemäß einem weiteren Ausführungsbeispiel mit einer Schraube mit Bewegungsgewinde,
- Fig. 13: eine Fig. 6 entsprechende Ansicht eines mehrteiligen Feilenelements gemäß einer weiteren Ausführungsform,
- Fig. 14: eine Seitenansicht des Feilenelements gemäß Fig. 13,
- Fig. 15: eine Schnittansicht gemäß Schnittlinie XV-XV in Fig. 13,
- Fig. 16: eine Fig. 13 entsprechende Ansicht eines Feilenelements gemäß einer weiteren Ausführungsform,
- Fig. 17: eine Schnittansicht gemäß Schnittlinie XVII-XVII in Fig. 16,
- Fig. 18: eine perspektivische Ansicht einer Feile gemäß einem weiteren Ausführungsbeispiel,
- Fig. 19: eine Schnittdarstellung gemäß Schnittlinie XIX-XIX in Fig. 18,
- Fig. 20: eine Draufsicht auf eine Feilenhaltelement-Aufnahme der Feile in Fig. 18,
- Fig. 21: eine Schnittdarstellung gemäß Schnittlinie XXI-XXI in Fig. 20,
- Fig. 22: eine Draufsicht auf eine Feilenhalteelement-Führung der Feile in Fig. 18,
- Fig. 23: eine vergrößerte Schnitt-Darstellung eines Halteelements der Feile in Fig. 18,
- Fig. 24: eine Draufsicht auf ein Feilenhalteelement einer Feile gemäß einem weiteren Ausführungsbeispiel,
- Fig. 25: eine Schnittdarstellung gemäß Schnittlinie XXV-XXV in Fig. 24,
- Fig. 26: eine Querschnittdarstellung eines Feileneinsatz-Elements der Feile in Fig. 24,
- Fig. 27: eine Draufsicht auf einen längenveränderlichen Feilengrundkörper einer Feile gemäß einem weiteren Ausführungsbeispiel,
- Fig. 28: eine Schnittdarstellung gemäß Schnittlinie XXVIII-XXVIII in Fig. 27,
- Fig. 29: eine Fig. 27 entsprechende Schnittdarstellung mit einem oberflächenveränderlich einstellbaren Feilengrundkörper,
- Fig. 30: eine Fig. 27 entsprechende Schnittdarstellung eines Feilengrundkörpers gemäß einem weiteren Ausführungsbeispiel mit einer veränderlich einstellbaren Druckfeder-Vorspannung,
- Fig. 31: eine Draufsicht auf eine Feile mit mehreren Feilenelementen gemäß einem weiteren Ausführungsbeispiel,
- Fig. 32: eine Schnittdarstellung gemäß Schnittlinie XXXII-XXXII in Fig. 31,
- Fig. 33: eine Schnittdarstellung gemäß Schnittlinie XXXIII-XXXIII in Fig. 31.

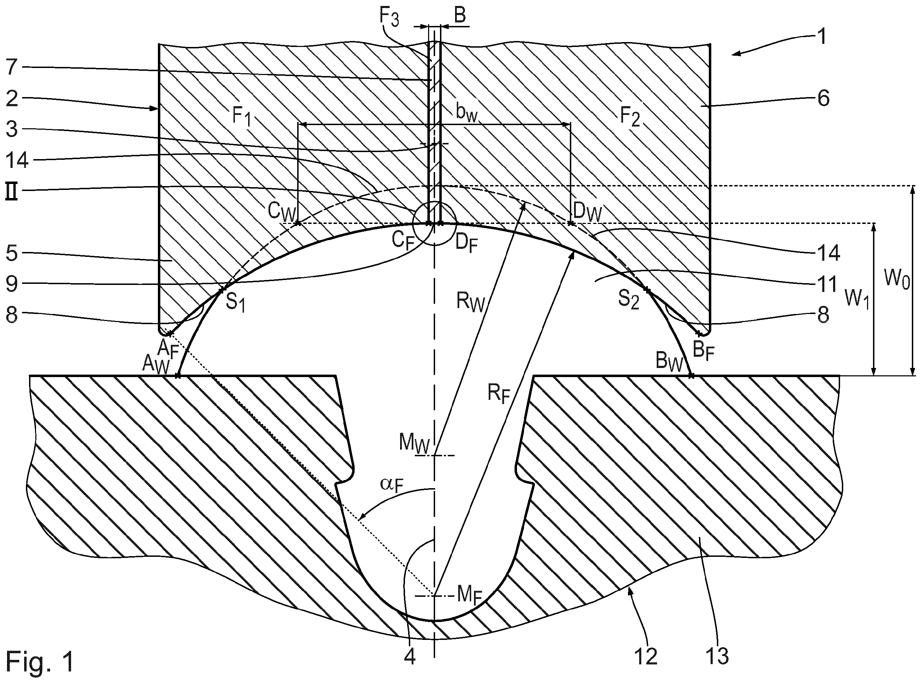

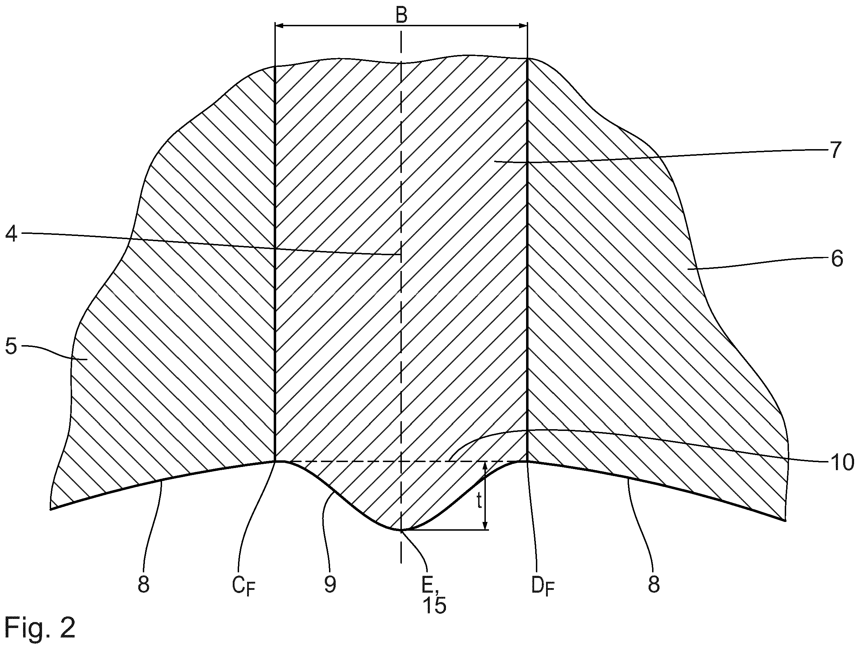

Eine in Fig. 1 und 2 als Ganzes mit 1 dargestellte Feile umfasst einen Feilengrundkörper 2 sowie einen an dem Feilengrundkörper 2 befestigten Feilengriff. Der Feilengriff ist außerhalb der Darstellungsebene angeordnet und in Fig. 1 nicht gezeigt. Die Feile 1 kann auch ohne Feilengriff ausgeführt sein. Die Feile 1 wird dann direkt am Feilengrundkörper 2 gegriffen, wodurch ein präziseres Arbeiten ermöglicht sein kann.

Der Feilengrundkörper 2 weist eine senkrecht zur Darstellungsebene in Fig. 1 orientierte Längsachse 3 sowie eine die Längsachse 3 enthaltende Mittenebene 4 auf.

Der Feilengrundkörper 2 ist durch zwei Feilenelemente 5, 6 gebildet, die in der Zeichenebene gemäß Fig. 1 nebeneinander angeordnet sind. Die Feilenelemente 5, 6 sind insbesondere aus einem Werkzeugwerkstoff hergestellt, insbesondere aus einem Stahlwerkstoff und insbesondere aus einem Werkzeugstahl oder alternativ aus einem Aluminiumwerkstoff. Die Feilenelemente 5, 6 sind fest miteinander verbunden, beispielsweise miteinander verklebt. Als Klebeflächen dienen insbesondere die jeweiligen Kontaktflächen zwischen den beiden Feilenelementen 5 und 6. Das Verkleben kann großflächig und insbesondere vollflächig erfolgen. Eine derartige Klebeverbindung ist stabil und insbesondere mit hoher Lagegenauigkeit der Feilenelemente zueinander möglich. Insbesondere sind jeweils zwei Feilenelemente paarweise fest miteinander verbunden.

Der Feilengrundkörper 2 weist zwischen den beiden Feilenelementen 5, 6 eine schlitzförmige Vertiefung auf. Gemäß dem gezeigten Ausführungsbeispiel erstreckt sich die schlitzförmige Vertiefung über den gesamten Zeichnungsbereich. Es ist denkbar, dass die Feilenelemente 5, 6 eine gemeinsame Kontaktfläche aufweisen, die außerhalb des Zeichnungsbereichs liegt. An diesen Kontaktflächen können die Feilenelemente 5, 6 miteinander verklebt sein. Es ist alternativ denkbar, dass der Feilengrundkörper 2 mit der schlitzartigen Vertiefung einteilig hergestellt ist, also aus nur einem einzigen Feilenelement besteht, in das die schlitzartige Vertiefung eingearbeitet ist.

Der Feilengrundkörper 2 ist bezüglich der Mittenebene 4 spiegelsymmetrisch ausgeführt. Der Feilengrundkörper 2 ist profilartig ausgeführt, wobei die Längsachse 3 der Profillängsachse entspricht. Die Feilenelemente 5, 6 sind insbesondere identisch ausgeführt und bezüglich der Mittenebene 4 spiegelsymmetrisch zueinander angeordnet.

Die beiden außenliegenden Feilenelemente 5, 6 weisen eine abrasive Bearbeitungsoberfläche 8 auf, die zur Werkstückbearbeitung dient. Die abrasive Bearbeitungsoberfläche 8 ist gemäß dem gezeigten Ausführungsbeispiel durch eine Diamantbeschichtung gebildet.

An dem Feilengrundkörper 2 ist, insbesondere in der schlitzartigen Vertiefung, ein Tiefenstoppelement 7 angeordnet. Das Tiefenstoppelement 7 ist insbesondere zwischen den Feilenelementen 5, 6 und insbesondere konzentrisch bezüglich der Mittenebene 4 angeordnet.

Das Tiefenstoppelement 7 weist eine nicht-abrasive Gleitoberfläche 9 auf, die insbesondere unbeschichtet ausgeführt ist. Die nicht-abrasive Gleitoberfläche 9 ist insbesondere durch den Grundwerkstoff des Tiefenstoppelements 7, insbesondere den Stahlwerkstoff und insbesondere den Werkzeugstahl, gebildet und insbesondere geschliffen und/oder poliert ausgeführt.

Die abrasiven Bearbeitungsoberflächen 8 sind jeweils, insbesondere durchgängig, konkav ausgeführt und weisen eine Krümmung auf mit einem Krümmungsradius R_{F}. Die abrasiven Bearbeitungsoberflächen 8 weisen jeweils eine Kreissegmentkontur mit dem Radius R_{F} auf und erstrecken sich zwischen den Punkten A_{F} bis C_{F} bzw. von D_{F} bis B_{F}. Der jeweilige Öffnungswinkel α_{F} bezogen auf den Mittelpunkt M_{F} der Krümmungskontur ist gemäß dem gezeigten Ausführungsbeispiel etwa 45°. Der Mittelpunkt M_{F} ist in der Mittenebene 4 angeordnet.

Die Kontur der nicht-abrasiven Gleitoberfläche 9 ist insbesondere in der Detailansicht gemäß Fig. 2 dargestellt. Die Kontur der nicht-abrasiven Gleitoberfläche 9 ist zumindest abschnittsweise konvex und insbesondere vollständig konvex ausgeführt. Die nicht-abrasive Gleitoberfläche 9 ist gekrümmt ausgeführt und weist einen knickfreien Übergang zu den abrasiven Bearbeitungsoberflächen 8 in den Punkten C_{F} und D_{F} auf. Durch die Endpunkte C_{F} und D_{F} der abrasiven Bearbeitungsoberflächen 8 ist eine virtuelle Verbindungslinie 10 definiert. Bezogen auf die Verbindungslinie 10 weist die nicht-abrasive Gleitoberfläche 9 ein lokales Extremum E, insbesondere ein lokales Maximum, auf, das bezüglich der Verbindungslinie 10 einen Tiefenabstand t aufweist. Der Tiefenabstand t ist senkrecht zu der Verbindungslinie 10 orientiert. Bei einer Deckung des lokalen Extremums E und einem lokalen Maximum des von den Feilenelementen 5, 6 aufgespannten Splines können parallel zur Längsachse 3 der Feile 1 kleine Zwischenräume entstehen. Auch mit diesen Zwischenräumen ist ein knickfreier Übergang zwischen den abrasiven Bearbeitungsoberflächen 8 und der nicht-abrasiven Gleitoberfläche 9 im Sinne der Anmeldung gegeben.

Das Maximum E ist in der Mittenebene 4 angeordnet. Insbesondere ist die Kontur der nicht-abrasiven Gleitoberfläche 9 spiegelsymmetrisch zu der Mittenebene 4 ausgeführt. Das Maximum E ragt an der Bearbeitungsoberfläche, insbesondere gegenüber den abrasiven Bearbeitungsoberflächen 8, vor. Das Maximum E dient als Tiefenstopp für die Feile 1, also als Anlagelinie der Feile 1 an einem Werkstück.

Das Tiefenstoppelement 7 und damit die nicht-abrasive Gleitoberfläche 9 weisen eine senkrecht zur Längsachse 3 und insbesondere senkrecht zur Mittenebene 4 orientierte Breite B auf, die insbesondere höchstens 0,3 mm und insbesondere zwischen 0,01 mm und 0,1 mm beträgt.

In Fig. 1 ist unterhalb der Feile 1 ein Werkstück 11 dargestellt, das als Bundstab auf dem Griffbereich eines Saiteninstruments, insbesondere eines Zupfinstruments 12, angeordnet ist. Der Griffbereich des Zupfinstruments 12 umfasst ein Griffbrett 13. Der Bundstab 11 weist eine gekrümmte Kontur mit einem Krümmungsradius R_{W} bezogen auf einen Mittelpunkt M_{W} auf. Der Mittelpunkt M_{W} ist in der Mittenebene 4 angeordnet. Der Krümmungsradius R_{W} des Bundstabs 11 ist kleiner als der Krümmungsradius R_{F} der abrasiven Bearbeitungsoberflächen 8. Bei der Verankerung des Bundstabs 11 im Griffbrett 13 ist die ursprüngliche gekrümmte Außenkontur des Bundstabes 11 abgeflacht worden. Die abgeflachte Kontur des Bundstabs 11 ergibt entlang der Konturpunkte A_{W} bis C_{W} mit der Krümmung R_{W}, von C_{W} bis D_{W} mit einem abgeflachten Verlauf, sowie von D_{W} wieder mit der Krümmung R_{W} bis zu dem Endpunkt B_{W}.

Die bezüglich der Mittenebene 4 senkrecht orientierte Breite des Bundstabes 11 zwischen den Konturendpunkten A_{W} und B_{W} entspricht der Breite des Feilengrundkörpers 2 zwischen den Konturendpunkten A_{F} und B_{F}.

Durch die Abflachung des Bundstabes 11 zwischen den Punkten C_{W} und D_{W} wurde die ursprüngliche Werkstückhöhe W₀ auf die abgeflachte Werkstückhöhe W₁ reduziert. Die abgeflachte Werkstückkontur kann mittels der Feile 1 verrundet werden, indem die Flanken 14 des Bundstabes 11 mittels der Feile 1 abrasiv abgetragen werden. Die Flanken 14 sind die Materialbereiche des Bundstabes 11, die gegenüber der Bearbeitungsoberfläche 8 und der Gleitoberfläche 9 vorstehen. In Fig. 1 sind die Flanken 14 gebildet durch die Kontur jeweils ausgehend von den Schnittpunkten S₁ bzw. S₂ und den Konturendpunkten C_{W} und D_{W}. Die Flanken 14 werden sukzessiv über die gesamte Länge des Bundstabes 11 abgetragen, wobei die Breite der Strecke C_{W}, D_{W} auf die Breite B reduziert wird. In diesem Bereich liegt die Feile 1 mit dem Maximum E an dem Bundstab 11 auf und verhindert so einen unerwünschten Materialabtrag. Durch Neigen der Feile 1 um die Auflagekante 15 an dem Maximum E, also durch Drehen der Feile 1 an der Auflagekante 15 gemäß Fig. 1, 2 im Uhrzeigersinn bzw. im Gegenuhrzeigersinn, kann der verbleibende Restbundstab C_{W}, D_{W} endgültig verrundet werden.

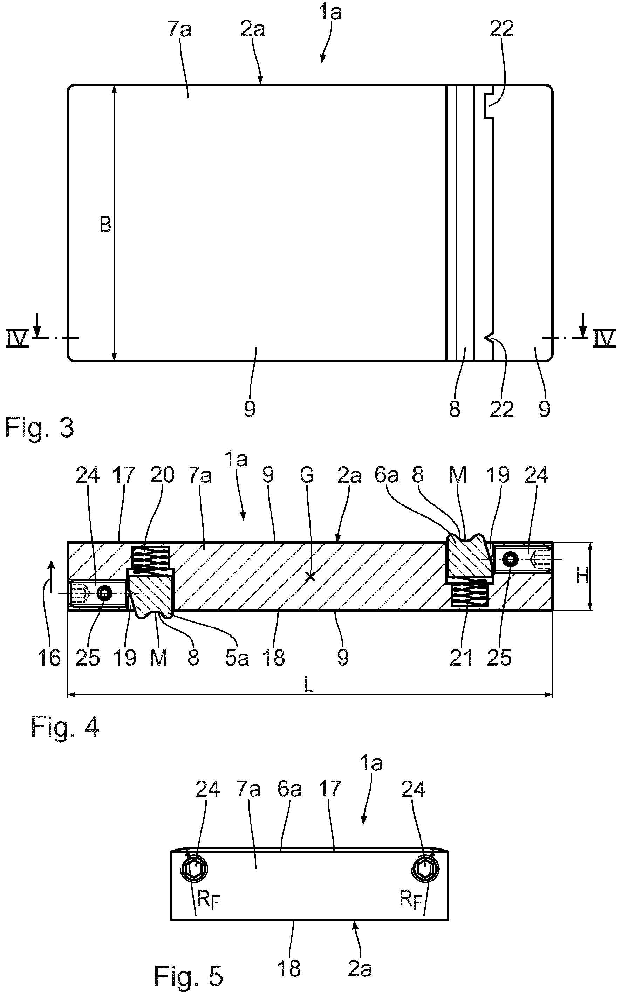

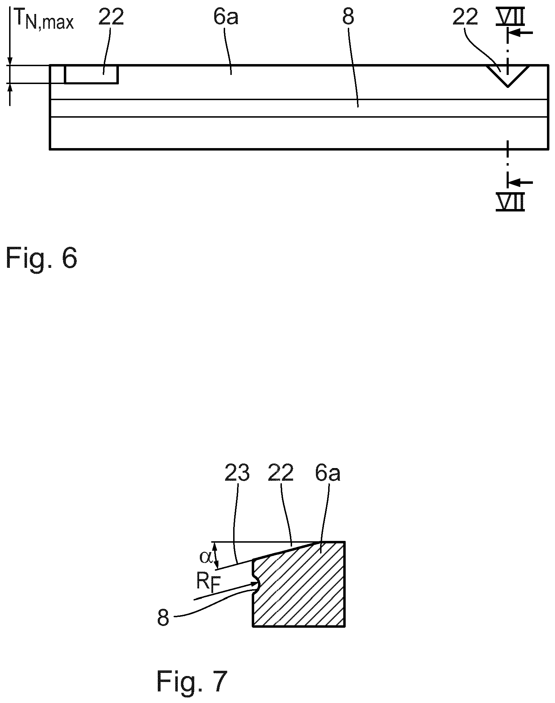

Im Folgenden wird unter Bezugnahme auf Fig. 3 bis 7 ein weiteres Ausführungsbeispiel beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein wesentlicher Unterschied gegenüber dem ersten Ausführungsbeispiel besteht darin, dass bei der Feile 1a der Feilengrundkörper 2a durch das Tiefenstoppelement 7a gebildet ist. Der Feilengrundkörper 2a ist im Wesentlichen quaderförmig ausgeführt und weist eine Länge L, eine Breite B und eine Höhe H auf. Gemäß dem gezeigten Ausführungsbeispiel ist die Breite B kleiner als die Länge L. Vorteilhaft ist es, wenn die Breite B in Abhängigkeit der Länge der zu bearbeitenden Bundstäbe festgelegt wird. Möglich ist es, die Breite B zwischen 10% bis 300% der Bundstablänge zu wählen, insbesondere zwischen 30% und 200% und insbesondere zwischen 50% und 100%. Die Höhe H erstreckt sich entlang einer Tiefenrichtung 16, die insbesondere senkrecht zur Breite B und senkrecht zur Länge L des Feilengrundkörpers 2a orientiert ist.

Die Feilenelemente 5a, 6a sind an dem Feilengrundkörper 2a derart angeordnet, dass sich die Längsachse 3 der Feilenelemente 5a, 6a jeweils entlang der Breite B des Feilengrundkörpers 2a erstrecken. Entlang der Länge L des Feilengrundkörpers 2a sind die Feilenelemente 5a, 6a nebeneinander angeordnet. Insbesondere weisen die Feilenelemente 5a, 6a entlang ihrer Längsachse 3 eine Feilenelementlänge auf, die identisch ist mit der Breite B des Feilengrundkörpers 2a.

Der Feilengrundkörper 2a weist eine Oberseite 17 und eine Unterseite 18 auf, die die Höhe H des Feilengrundkörpers 2a begrenzen. Die Oberseite 17 ist in Fig. 4 oben angeordnet. Die Unterseite 18 ist in Fig. 4 unten angeordnet. Der Feilengrundkörper 2a ist bezüglich seines Schwerpunkts G punktsymmetrisch ausgeführt. Durch eine 180°-Drehung des Feilengrundkörpers 2a gemäß Fig. 4 um den Schwerpunkt sind Oberseite 17 und Unterseite 18 miteinander vertauscht. Der Feilengrundkörper 2a weist Vertiefungen 19 auf, die sich jeweils von der Oberseite 17 bzw. von der Unterseite 18 ausgehend entlang der Tiefenrichtung 16 erstrecken. Die Vertiefung 19 ist in Tiefenrichtung 16 nicht durchgängig ausgeführt und erstreckt sich über etwa 50% der Höhe H des Feilengrundkörpers 2a. Entlang der Breite B ist die Vertiefung 19 durchgängig ausgeführt.

Die Oberseite 17 und die Unterseite 18 sind im Wesentlichen identisch ausgeführt und weisen in Längsrichtung L die beiden außenliegenden nicht-abrasiven Gleitoberflächen 9 und die dazwischen angeordnete, abrasive Bearbeitungsoberfläche 8 auf. Beim Bearbeiten eines Bundstabes mit dem jeweiligen Feilenelement 5a, 6a kann die Feile 1a mit den Gleitoberflächen 9 an benachbarten Bundstäben, die nicht bearbeitet werden, aufgelegt werden. Die Gleitoberflächen 9 verhindern einen Materialabtrag an den benachbarten Bundstäben. Der Feilengrundkörper 2a hat die Funktion des Tiefenstoppelements 7a.

In Tiefenrichtung 16 schließt sich an die Vertiefung 19 eine Federaufnah-me 20 an. Entlang der Breitenrichtung können unterhalb der Vertiefung 19 mehrere Federaufnahmen 20, insbesondere zwei und insbesondere mindestens drei Federaufnahmen 20 angeordnet sein. Die Federaufnahmen 20 sind jeweils als zylindrische Sackbohrung ausgeführt. Insbesondere sind die Federaufnahmen 20 in Tiefenrichtung 16 nicht durchgängig ausgeführt.

In jede Federaufnahme 20 ist ein Federelemente 21 eingesetzt, das sich am Grund der Federaufnahme in Tiefenrichtung 16 axial abstützt. Das Federelement 21 ist gemäß dem gezeigten Ausführungsbeispiel als mechanische Feder, insbesondere als Schraubendruckfeder, ausgeführt. Die mechanische Feder kann auch eine Blattfeder sein. Es sind auch andere Ausgestaltungen des Federelements möglich, wie beispielsweise eine Luftdruckfederung.

Die Druckfeder 21 ist derart dimensioniert, dass sie im unbelasteten Zustand aus der Federaufnahme 20 vorsteht und in die Vertiefung 19 hineinragt.

In der Vertiefung 19 ist ein Feilenelement 5a, 6a eingesetzt. Jedes Feilenelement 5a, 6a ist mit der abrasiven Bearbeitungsoberfläche 8, die insbesondere in Form einer Hohlfeile mit konkaver Kontur ausgeführt ist, derart an dem Feilengrundkörper 2a angeordnet, dass die konkave Kontur gegenüber der Oberseite 17 bzw. der Unterseite 18 jeweils vorsteht. Die konkave Kontur weist jeweils ein lokales Minimum M auf. Besonders vorteilhaft ist es, wenn das lokale Minimum M gegenüber der Oberseite 17 bzw. der Unterseite 18 in Tiefenrichtung 16 zurückversetzt angeordnet ist.

An einer der konkaven Kontur gegenüberliegenden Bodenseite ist das jeweilige Feilenelement 5a, 6a jeweils an den Druckfedern 21 abgestützt.

Die Feilenelemente 5a, 6a weisen seitliche Haltenuten 22 auf, die entlang der Breitenrichtung beabstandet zueinander angeordnet sind. Die Haltenuten 22 dienen zum Halten und/oder Justieren der Feilenelemente 5a, 6a am Feilengrundkörper 2a. Die Haltenuten 22 werden auch als Justagenuten bezeichnet. Gemäß dem gezeigten Ausführungsbeispiel ist eine Justagenut 22 mit einem V-förmigen Nutprofil und die andere Justagenut 22 mit einem rechteckförmigen Nutprofil ausgeführt. Die Justagenut 22 erstreckt sich entlang einer geneigten Nutrichtung 23, die mit einem Neigungswinkel α gegenüber der Tiefenrichtung 16 geneigt ist. Die Justagenut 22 weist in Tiefenrichtung 16 eine veränderliche Nuttiefe T_{N} auf, wobei eine maximale Nuttiefe T_{N,max} an einer der abrasiven Bearbeitungsoberfläche 8 zugewandten Oberfläche ausgebildet ist.

Zum Halten und Feinjustieren des jeweiligen Feilenelements 5a, 6a in der zugehörigen Vertiefung 19, insbesondere entlang der Tiefenrichtung und insbesondere entgegen der Federkraft der Druckfeder 21, sind mehrere, insbesondere jeweils zwei, Halteelemente 24 je Feilenelement 5a bzw. 6a vorgesehen. Die Halteelemente sind als Feinjustageschrauben 24 ausgeführt, die insbesondere ein Gewinde und insbesondere ein Feingewinde aufweisen. Die Feinjustageschrauben dienen insbesondere zur Justierung, insbesondere zur Feinjustierung, der Feilenelemente 5a, 6a gegen die von dem Federelement 21 ausgeübte Federkraft. Die Feinjustageschrauben 24 dienen insbesondere zur Positionierung und insbesondere zur Feinpositionierung des lokalen Minimums M an der konkaven Kontur des jeweiligen Feilenelements 5a, 6a bezogen auf die Tiefenrichtung 16. Gemäß dem gezeigten Ausführungsbeispiel sind die Feinjustageschrauben 24 als Kugelkopfschrauben in einer Ausführung als Madenschraube ausgeführt. An den beiden gegenüberliegenden Stirnseiten, die sich entlang der Höhe H und der Breite B erstrecken, sind Querbohrungen mit Innengewinde angeordnet, die jeweils in die Vertiefung 19 münden. Die Madenschrauben werden so weit in die Querbohrung eingedreht, bis sie mit ihrem Kugelkopf in die jeweilige Justagenut 22 eingreifen. Dadurch, dass zumindest eine Justagenut 22 V-förmig ausgeführt ist, ist das jeweilige Feilenelement 5a, 6a in Breitenrichtung axial und/oder entlang der Tiefenrichtung 16 positioniert und damit fixiert. Dadurch, dass die andere Justagenut 22 rechteckförmig oder U-förmig ausgeführt ist, weisen die Feilenelemente 5a, 6a in Längsrichtung der Längsachse 3 ein gewisses Spiel auf und ermöglichen damit eine Toleranz, sollte das jeweilige Feilenelement 5a, 6a bei einer Verlagerung entlang der Tiefenrichtung 16 unbeabsichtigt in einem geringen Winkelbereich, der insbesondere kleiner ist als 2°, insbesondere kleiner als 1° und insbesondere kleiner als 0,5°, verkippen. Eine derartige Verkippung könnte kurzzeitig durch die genannte Toleranz in Axialrichtung ausgeglichen werden, so dass insbesondere ein unerwünschtes Klemmen des Feilenelements 5a, 6a am Feilengrundkörper 2a verhindert wird.

Zum Betätigen der Feinjustageschrauben 24 weisen diese an ihrem rückwärtigen Ende eine Innensechskantöffnung auf. Es ist auch denkbar, dass die Feinjustageschrauben 24 nicht als Madenschrauben ausgeführt sind.

Zur Sicherung der Feinjustageschrauben 24 können zusätzliche Sicherungs-Madenschrauben 25 verwendet werden, die sich insbesondere in Breitenrichtung erstrecken und durch die jeweilige Feinjustageschraube 24, insbesondere quer zur Einschraubrichtung der jeweiligen Feinjustageschraube 24, einschraubbar sind. Dazu weist die jeweilige Feinjustageschraube 24 eine Durchgangsöffnung mit Innengewinde auf, das mit dem Außengewinde der Sicherungs-Madenschraube 25 korrespondiert.

Die Feinjustageschraube 24 ermöglicht eine unmittelbare und direkte Feinjustage der Position der Feilenelemente 5a, 6a gegenüber dem Feilengrundkörper 2a entlang der Tiefenrichtung 16. Eine derartige Feinjustage kann insbesondere aufgrund von Fertigungstoleranzen, insbesondere bei der Herstellung der Feilenelemente 5a, 6a erforderlich werden.

Die konkave Kontur der Bearbeitungsoberfläche 8 ist insbesondere kreisbogenförmig und insbesondere als Teilkreis mit einer Bogenlänge kleiner als die eines Halbkreises ausgeführt mit einem konstanten Krümmungsradius R_{F}. Dadurch, dass die Bogenlänge kleiner ist als die eines Halbkreises, ist gewährleistet, dass das Feilenelement 5a, 6a nicht auf dem Griffbrett aufsteht und somit eine vollständige Bearbeitung des Werkstücks verhindert sein könnte. Die Bogenlänge beträgt insbesondere weniger als 180°, insbesondere höchstens 175°, insbesondere höchstens 170°, insbesondere höchstens 165° und insbesondere höchstens 145°. Insbesondere ist das jeweilige Feilenelement 5a, 6a in Breitenrichtung jeweils stirnseitig mit dem Krümmungsradius R_{F} zu den Seitenkanten hin abgerundet.

Gemäß einem weiteren, in der Zeichnung nicht dargestellten Ausführungsbeispiel, das im Wesentlichen dem vorherigen Ausführungsbeispiel gemäß Fig. 3 bis 7 entspricht, weist das mindestens eine Feilenelement 5a, 6a eine flache Bearbeitungsoberfläche 8 auf. Die Bearbeitungsoberfläche 8 ist also insbesondere nicht konkav und nicht konvex ausgeführt. Die Bearbeitungsoberfläche 8 ist ungekrümmt.

Das mindestens eine Feilenelement ist derart am Feilengrundkörper angeordnet, dass die Bearbeitungsoberfläche flächenbündig am Feilengrundkörper angeordnet ist. Das bedeutet, dass die abrasive Bearbeitungsoberfläche in einer durch die Gleitfläche des Feilengrundkörpers bestimmten Ebene liegt.

Eine derartige Feile kann insbesondere für eine Reparatur eines einzelnen Bundstabes dienen, wenn dieser einzelne Bundstab an dem Griffbrett zwischen weiteren Bundstäben eingesetzt wird, wobei diese weiteren Bundstäbe bereits abgerundet worden sind. Mit der hier beschriebenen Feile ist eine Vorbearbeitung mittels des flach ausgeführten Feilenelements möglich, wobei eine Endbearbeitung insbesondere mittels einer Feile gemäß dem ersten Ausführungsbeispiel in Fig. 1 und 2 erfolgt.

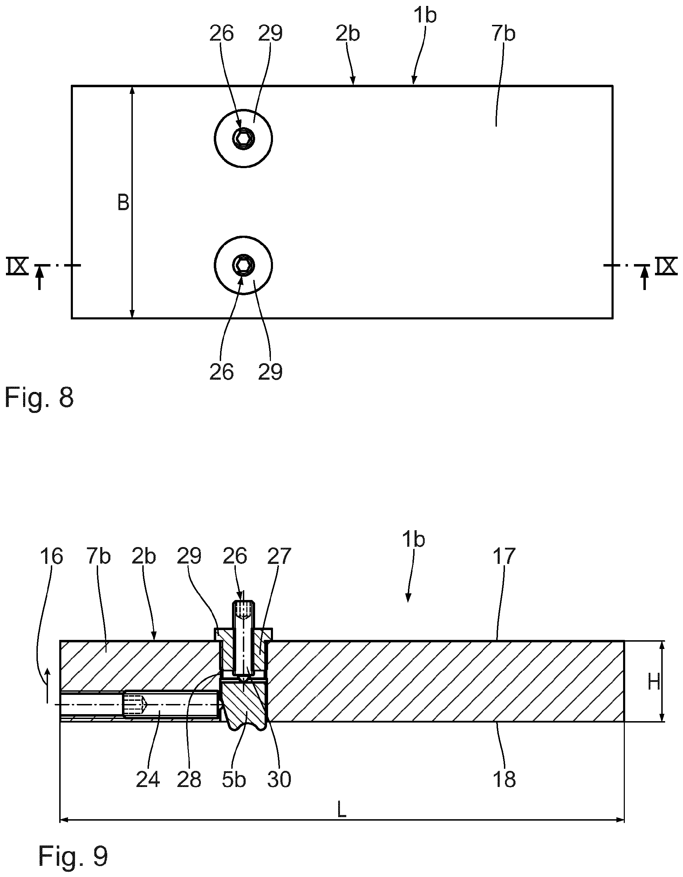

Im Folgenden wird unter Bezugnahme auf Fig. 8 und 9 ein drittes Ausführungsbeispiel beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Ein wesentlicher Unterschied gegenüber dem vorherigen Ausführungsbeispiel besteht darin, dass eine Verstellung der Position des Feilenelements 5b mittels einer Feinjustageschraube 26 erfolgt. Insbesondere sind entlang der Breite B zwei Feinjustageschrauben 26 beabstandet zueinander angeordnet und dienen zur Feinjustage des Feilenelements 5b in Tiefenrichtung 16. Ein Verkippen des Feilenelements 5b mit seiner Längsachse 3 gegenüber der von der Unterseite 18 definierten Ebene ist dadurch ausgeschlossen. Die Feinjustageschraube 26 umfasst eine hülsenartige Aufnahme 27 mit einem Außengewinde, das in ein korrespondierendes Innengewinde einer Schraubenaufnahme 28 in dem Feilengrundkörper 2b einschraubbar ist. Damit ist die Feinjustageschraube zuverlässig am Feilengrundkörper 2b angeordnet und daran festgelegt.

Einteilig mit der Hülsenaufnahme 27 ist ein radial vorspringender Bundanschlag 29 vorgesehen, der an der Oberseite 17 des Feilengrundkörpers 2b vorsteht. Der Bundanschlag 29 weist einen Außendurchmesser auf, der größer ist als ein Innendurchmesser der Schraubenaufnahme 28. Die Hülsenaufnahme 27 weist eine Durchgangsbohrung auf mit Innenfeingewinde, in das ein Stift 30 der Feinjustageschraube 26 mit einem korrespondierenden Außenfeingewinde einschraubbar ist. Der Stift 30 weist einen Kugelkopf auf und kann in Tiefenrichtung 16 bis zum Anschlag an der Bodenwand des Feilenelements 5b eingeschraubt werden. Die Feinjustageschraube 26 ermöglicht eine unmittelbare und direkte Feinjustage der Position des Feilenelements 5b gegenüber dem Feilengrundkörper 2b entlang der Tiefenrichtung 16. Eine derartige Feinjustage kann insbesondere aufgrund von Fertigungstoleranzen, insbesondere bei der Herstellung des Feilenelements 5b erforderlich werden.

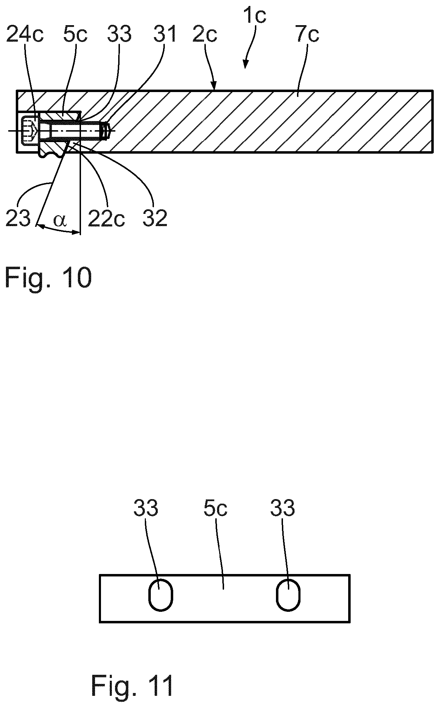

Im Folgenden wird unter Bezugnahme auf Fig. 10 und 11 ein viertes Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Ein wesentlicher Unterschied gegenüber den vorherigen Ausführungsbeispielen besteht darin, dass das Feilenelement 5c unmittelbar an dem Feilengrundkörper 2c der Feile 1c festgelegt ist. Dazu dient das Halteelement 24c, das als Durchsteckschraube ausgeführt ist. Das Halteelement 24c kann als Schraube mit metrischem Gewinde und Schraubenkopf mit Innensechskant, als sogenannte Inbusschraube, ausgeführt sein. An dem Feilengrundkörper 2c ist für jedes Halteelement 24c ein korrespondierendes Befestigungsgewinde 31 angeordnet, das als Sackbohrung mit Innengewinde ausgeführt ist. Insbesondere sind in Breitenrichtung 2 zueinander beabstandete Befestigungsgewinde 31 an dem Feilengrundkörper 2c angeordnet.

Ein weiterer Unterschied gegenüber den vorherigen Ausführungsbeispielen besteht darin, dass bei dem Feilenelement 5c die Haltenuten 22 an einer dem Halteelement 24c abgewandten, insbesondere gegenüberliegend angeordneten, Seitenwand ausgeführt sind. Mit den Haltenuten 22c korrespondierende Vorsprünge 32 sind an dem Feilengrundkörper 2c, insbesondere einteilig, ausgebildet. Die Haltenuten 22c und die korrespondierenden Vorsprünge 32 sind jeweils um den Neigungswinkel α gegenüber der Tiefenrichtung 16 geneigt angeordnet. Das Feilenelement 5c ist entlang der Nutrichtung 23 gegenüber dem Feilengrundkörper 2c verschiebbar.

Bei dem gezeigten Ausführungsbeispiel kann das Feilenelement 5c auch ohne Haltenut 22c und korrespondierende Vorsprünge 32 ausgeführt sein. Der durch die Halteelemente 24c erzeugte Kraftschluss zwischen dem Feilenelement 5c und dem Feilengrundkörper 2c verhindert eine Axialverschiebung des Feilenelements 5c entlang der Längsachse 3.

Um diese flexible Positionierung des Feilenelements 5c am Feilengrundkörper 2c zu vereinfachen, sind die Durchgangsöffnungen 33 in dem Feilenelement 5c insbesondere in Tiefenrichtung 16 mit einer lichten Weite b ausgeführt, die größer ist als der Außendurchmesser des Halteelements 24c. Es ist grundsätzlich denkbar, dass die Durchgangsöffnung 33 kreisförmig ausgeführt ist. Gemäß dem gezeigten Ausführungsbeispiel ist die Durchgangsöffnung 33 im Wesentlichen langlochförmig ausgeführt mit einer Längserstreckung in Tiefenrichtung 16. Die lichte Weite a in Breitenrichtung B ist insbesondere kleiner als die lichte Weite b in Tiefenrichtung 16. Dadurch ist es möglich, dass das Feilenelement 5c in Breitenrichtung durch die Halteelemente 24c veränderlich festgelegt ist. Die Montage des Feilenelements 5c an dem Feilengrundkörper 2c ist vereinfacht. Insbesondere ermöglichen die langlochförmigen Durchgangsöffnungen 33 eine Kompensation von Fertigungstoleranzen bei der Herstellung des Feilenelements 5c und/oder des Feilengrundkörpers 2c. Insbesondere sind die Halteelemente 24c in Breitenrichtung spielfrei in den Durchgangsöffnungen 33 angeordnet.

Eine präzise Justierung des Feilenelements wird hier durch nicht näher dargestellte Stahlfolien erreicht, die an geeigneten Stellen zwischen der der Bearbeitungsoberfläche 8 gegenüberliegenden Fläche des Feilenelements 5c und der korrespondierenden Fläche des Feilengrundkörpers 2c positioniert und geklemmt werden.

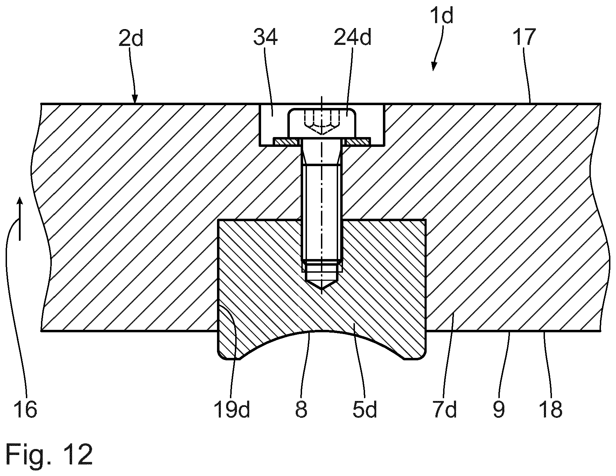

Im Folgenden wird unter Bezugnahme auf Fig. 12 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Ein wesentlicher Unterschied gegenüber den vorherigen Ausführungsbeispielen besteht darin, dass das Feilenelement 5d in Tiefenrichtung 16 unmittelbar von dem Halteelement 24d gehalten ist. Das Halteelement 24d ist als Befestigungsschraube in einer dafür vorgesehenen Ausnehmung 34 an der Oberseite 17 angeordnet und erstreckt sich entlang einer Durchgangsöffnung in Tiefenrichtung 16 bis zu der Vertiefung 19d, in der das Feilenelement 5d angeordnet ist. An seiner der konkaven Bearbeitungsoberfläche 8 gegenüberliegenden Bodenseite weist das Feilenelement 5d eine Aufnahmebohrung mit Innengewinde auf, das zu dem Außengewinde des Halteelements 24d korrespondiert.

Eine präzise Justierung des Feilenelements wird analog dem vorherigen Ausführungsbeispiel durch Stahlfolien erreicht.

Entlang der Breitenrichtung können mehrere Halteelemente 24d vorgesehen sein. Die Ausführung der Feile 1d und insbesondere die Befestigung der Feilenelemente 5d am Feilengrundkörper 2d ist besonders unkompliziert.

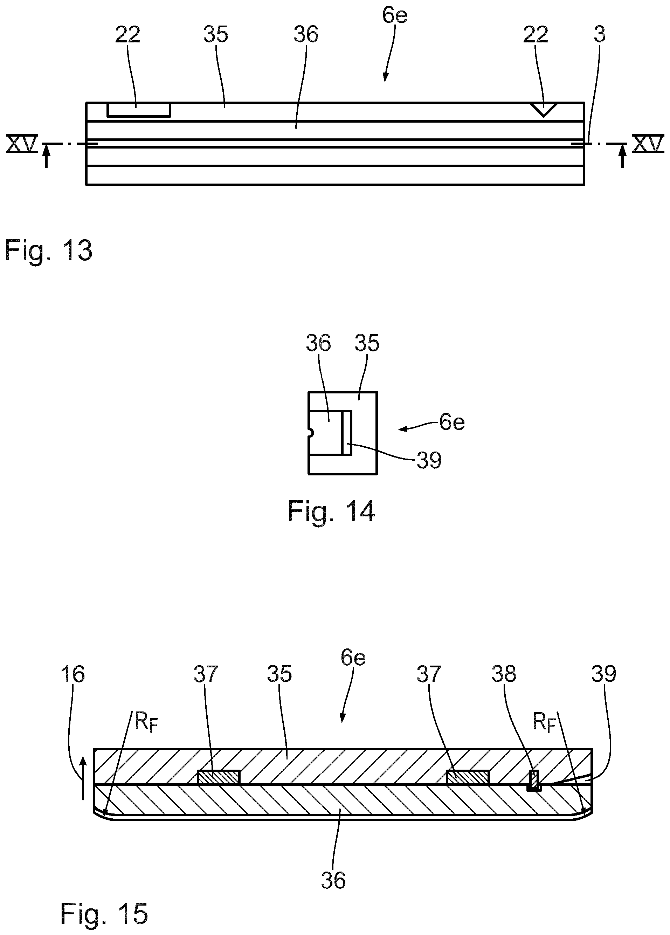

Im Folgenden wird unter Bezugnahme auf Fig. 13 bis 15 ein weiteres Ausführungsbeispiel beschrieben. Konstruktiv identische Teile erhalten dieselben Bezugszeichen, wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e.

Ein wesentlicher Unterschied gegenüber den bisherigen Ausführungsbeispielen besteht darin, dass das Feilenelement 6e mehrteilig ausgeführt ist. Das Feilenelement 6e umfasst ein Feilenhalteelement 35 und ein von dem Feilenelement 35 gehaltenes Feileneinsatzelement 36.

Das Feilenhalteelement 35 ist im Wesentlichen als offene Rechteck-Hohlleiste, also insbesondere im Wesentlichen U-förmig, ausgeführt. In das Feilenhalteelement 35 ist das Feileneinsatzelement 36 eingesetzt und in Tiefenrichtung 16 mittels mindestens einem Halteelement 37 gehalten. Gemäß dem gezeigten Ausführungsbeispiel sind mehrere, insbesondere zwei, Halteelemente 37 vorhanden. Die Halteelemente 37 sind insbesondere als Permanentmagnete ausgeführt, die insbesondere im Grund der Vertiefung des Feilenhalteelements 35 angeordnet und insbesondere im Feilenhalteelement 35 integriert sind. Insbesondere ist das Feileneinsatzelement 36 aus einem ferromagnetischen Material hergestellt und durch die magnetischen Halteelemente 37 im Feilenhalteelement 35 gehalten.

Vorteilhaft ist es, dass das Feileneinsatzelement 36 geometrisch unkompliziert ausgeführt sein kann. Die Herstellung des Feileneinsatzelements 36 ist vereinfacht.

Die für die Verbindung mit dem Feilengrundkörper 2 vorgesehenen Haltenuten 22 sind an dem Feilenhalteelement 35 ausgeführt.

Um eine axiale Fixierung entlang der Längsachse 3 des Feileneinsatzelements 36 an dem Feilenhalteelement 35 zu gewährleisten, ist ein in Tiefenrichtung 16 orientierter Sicherungsstift 38 zur Verbindung des Feileneinsatzelements 36 an dem Feilenhalteelement 35 angeordnet. Der Sicherungsstift 38 dient insbesondere auch zur Aufnahme von Scherkräften, die entlang der Längsachse 3 bei der Werkstückbearbeitung auftreten können.

Vorteilhaft ist es, wenn in einem Randbereich des Feilenelements 6e und insbesondere im Bereich einer Trennebene zwischen dem Feilenhalteelement 35 und dem Feileneinsatzelement 36 eine Aussparung 39 angeordnet ist. Die, insbesondere keilförmig ausgeführte Aussparung 39 dient als Werkzeugöffnung, um insbesondere ein Hebelwerkzeug anzusetzen, um das Feileneinsatzelement 36 entgegen der magnetischen Haltekraft von dem Feilenhalteelement 35 zu trennen.

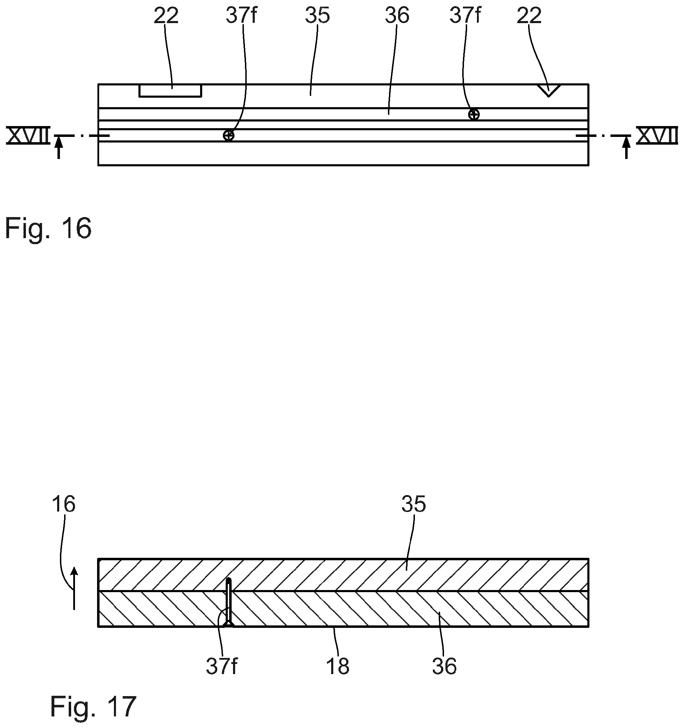

Im Folgenden wird unter Bezugnahme auf Fig. 16 und 17 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten f.

Dieses Ausführungsbeispiel entspricht im Wesentlichen dem vorherigen Ausführungsbeispiel, wobei das Feilenelement 6f mit Feilenhalteelement 35 und Feileneinsatzelement 36 ausgeführt ist. Als Halteelemente 37f dienen Querschrauben, die entlang der Tiefenrichtung 16 verlaufen, um eine Verbindung von Feileneinsatzelement 36 und Feilenhalteelement 35 zu gewährleisten. Insbesondere weist dazu das Feileneinsatzelement 36 eine Durchgangsbohrung und das Feilenhalteelement 35 ein Befestigungsinnengewinde auf, das mit dem Außengewinde der Halteschraube 37f korrespondiert.

Insbesondere sind die Schrauben 37f außerhalb des gekrümmten Werkstückbearbeitungsbereichs 8 an dem Feileneinsatzelement 36 angeordnet. Insbesondere sind die Halteschrauben 37f als Senkschrauben ausgeführt und gegenüber der äußeren Oberfläche 18 zurückversetzt angeordnet. Dadurch ist gewährleistet, dass die Werkstückbearbeitung aufgrund der Schraubverbindung nicht negativ beeinträchtigt wird.

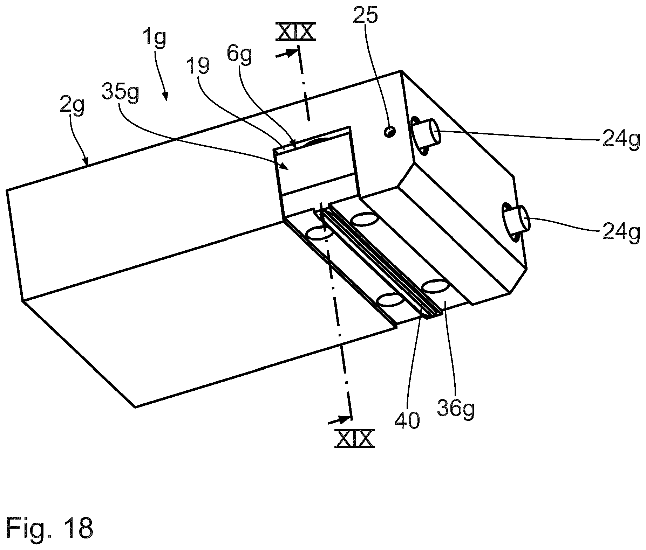

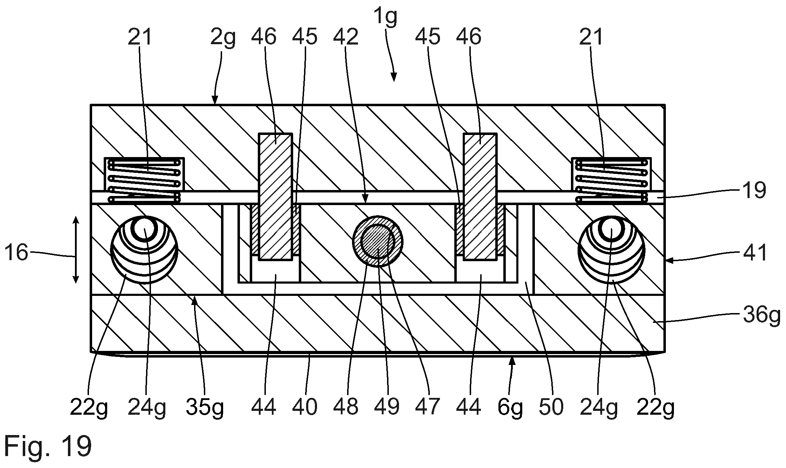

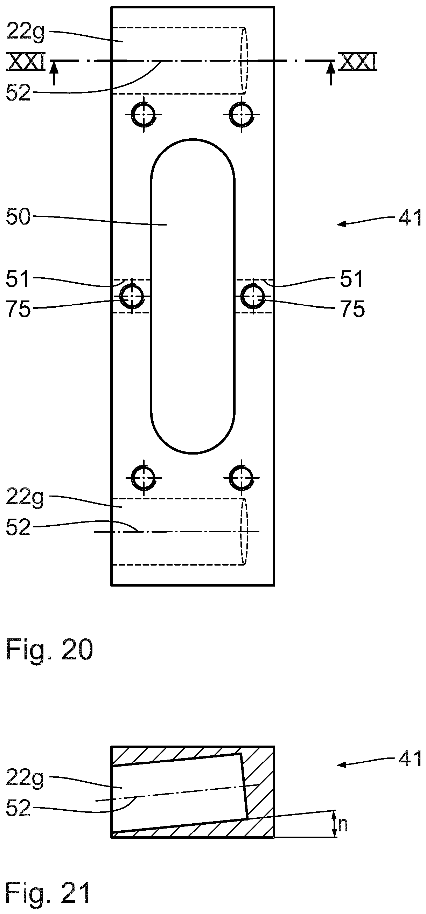

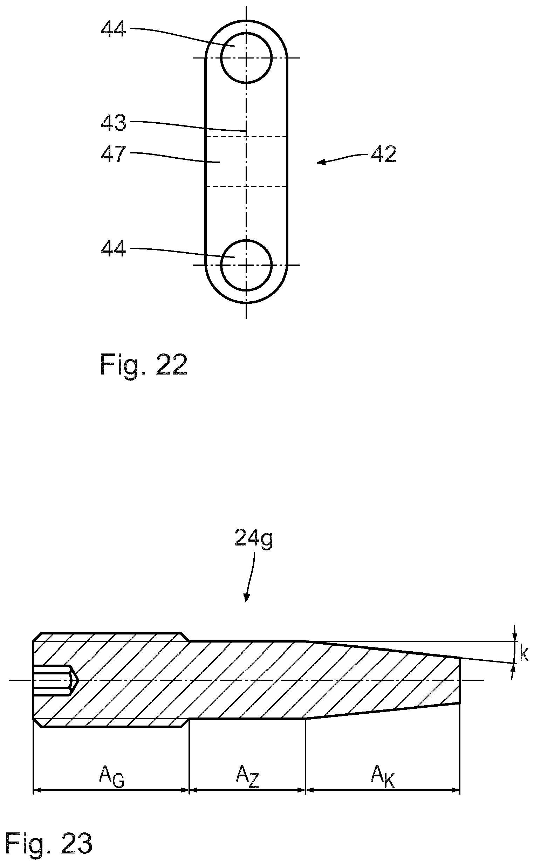

Im Folgenden wir unter Bezugnahme auf Fig. 18 bis 23 ein weiteres Ausführungsbeispiel beschrieben. Konstruktiv identische Teile halten dieselben Bezugszeichen wie bei den vorherigen Ausführungsbeispielen, auf deren Beschreibung hiermit verwiesen wird. Konstruktiv unterschiedliche, jedoch funktionell gleichartige Teile, halten dieselben Bezugszeichen mit einem nachgestellten g.

Bei der Feile 1g ist das Feilenelement 6g mehrteilig ausgeführt mit dem Feileneinsatzelement 36g, das an dem Feilenhalteelement 35g gehalten ist, insbesondere angeschraubt.

Das Feileneinsatzelement 36g ist einteilig ausgeführt und weist einen vorspringenden, leistenartigen Bearbeitungssteg 40 auf. Der Bearbeitungssteg 40 weist die abrasive Bearbeitungsoberfläche 8 auf. Der Bearbeitungssteg 40 ist mit einer konkaven Oberfläche ausgeführt.

Das Feileneinsatzelement 36g weist mehrere, gemäß dem gezeigten Ausführungsbeispiel vier, Durchgangsbohrungen auf. Durch die Durchgangsbohrungen können Halteschrauben für die Befestigung des Feileneinsatzelements 36g an das Feilenhalteelement 35g geschraubt werden.

Das Feilenhalteelement 35g ist mehrteilig ausgeführt und umfasst eine Feilenhalteelement-Aufnahme 41 und eine Feilenhalteelement-Führung 42. Die Feilenhalteelement-Führung 42 ist stegförmig ausgeführt und weist in einer Ebene senkrecht zu einer Steglängsachse 43 eine rechteckige und insbesondere quadratische Querschnittsfläche auf.

In einer Richtung senkrecht zu der Steglängsachse 43 weist die Feilenhalteelement-Führung 42 zwei Führungsbohrungen 44 auf, in die jeweils eine Gleitbuchse 45 einsetzbar ist. Die Führungsbohrungen 44 sind insbesondere durchgängig ausgeführt, erstrecken sich also über die gesamte Höhe der Feilenhalteelement-Führung 42. In die Gleitbuchsen 45 ist jeweils ein Passstift 46 eingesetzt, der in einer Vertiefung im Feilengrundkörper 2g gehalten ist. Die Passstifte 46 sind an der Feile 1g entlang der Tiefenrichtung 16 orientiert. Die Feilenhalteelement-Führung 42 ist entlang der Passstifte 46, also entlang der Tiefenrichtung 16, an den Passstiften 46, insbesondere relativ zu dem Feilengrundkörper 2g, geführt verlagerbar.

An einer Unterseite der Feilenhalteelement-Aufnahme 41 sind Druckfedern 21 angeordnet. Die Druckfedern 21 sind vorgespannt zwischen dem Feilengrundkörper 2g und dem Feilenhalteelement 35g angeordnet, dass eine Stellkraft auf das Feilenhalteelement 35g derart ausgeübt wird, dass es von dem Feilengrundkörper 2g weg aus der Vertiefung 19 herausgedrückt wird.

Die Feilenhalteelement-Führung 42 weist eine Quer-Durchgangsbohrung 47 auf, in die eine Quer-Gleitlagerbuchse 48 mit einem Querstift 49 eingesetzt ist. Die Quer-Durchgangsbohrung 47 ist in einer Richtung orientiert, die senkrecht zur Steglängsachse 43 und senkrecht zu den Führungsbohrungen 44 orientiert ist. Mit dem in der Quer-Gleitlagerbuchse 48 gelagerten Querstift 49 ist die Feilenhalteelement-Führung 42 in der Feilenhaltelement-Aufnahme 41 gehalten. Die Feilenhalteelement-Aufnahme 41 ist um den Querstift 49 drehbar an der Feilenhalteelement-Führung 42, also gelenkig angeordnet. Dazu weist die Feilenhalteelement-Aufnahme 41 eine langlochförmige Aussparung 50 auf. In einer Ebene senkrecht zu den Führungsbohrungen 44 weist die Feilenhalteelement-Führung 42 eine der langlochförmigen Aussparung 50 entsprechende Außenkontur auf. Die Feilenhalteelement-Aufnahme 41 weist an ihrer dem Feileneinsatzelement 36g zugewandten Oberseite vier Gewindebohrungen auf, die mit den Befestigungsöffnungen am Feileneinsatzelement 36g korrespondieren. Zur Aufnahme des Querstifts 49 weist die Feilenhalteelement-Aufnahme 41 bezüglich der Aussparung 50 gegenüberliegend angeordnete, fluchtende Querbohrungen 51 auf. In einer senkrechten Richtung ist bezüglich jeder Querbohrung 51 jeweils eine Gewindebohrung 75 angeordnet. In die Gewindebohrung 75 kann eine nicht dargestellte Madenschraube eingedreht werden, um den Querstift 49 in der jeweiligen Querbohrung 51 zu fixieren. Dazu kann der Querstift 49, der eine zylindrische Grundform aufweist, zumindest abschnittsweise abgeflacht sein.

An einer Seitenwand der Feilenhalteelement-Aufnahme 41 sind zwei Haltenuten 22g ausgeführt. Die Haltenuten 22g sind zylindrisch ausgeführt. Die Haltenuten 22g können auch eine unrunde Innenkontur aufweisen, die insbesondere rechteckig ausgeführt sein kann in einer Ebene senkrecht zur Nutlängsachse 52. Die Haltenuten 22g sind als Sacklochbohrungen ausgeführt. Die Bohrlochlängsachse 52 ist gegenüber einer Querachse der Querbohrung 51 mit einem Neigungswinkel n geneigt. Der Neigungswinkel n beträgt insbesondere weniger als 10°, insbesondere zwischen 2° und 8°, insbesondere zwischen 4° und 7° und insbesondere zwischen 5° und 6°. Insbesondere beträgt der Neigungswinkel n 5,7°.

In die Haltenuten 22g greift jeweils ein Halteelement 24g ein. Das Halteelement 24g ist vergrößert dargestellt. Das Halteelement 24g ist eine Stellschraube mit einem Gewindeabschnitt A_{G}, einem Zylinderabschnitt A_{Z} und einem Konusabschnitt A_{K}. Das Außengewinde des Gewindeabschnitts A_{G} entspricht einem korrespondierenden Innengewinde in einer Durchgangsöffnung im Feilengrundkörper 2g. In einer dazu orientierten Querbohrung kann eine Sicherungs-Madenschraube 25 angeordnet sein, um die Axialpositionierung des Halteelements 24g in dem Feilengrundkörper 2g zu sichern.

Der Zylinderabschnitt A_{Z} weist einen Kerndurchmesser auf, der kleiner ist als der Gewindedurchmesser des Gewindeabschnitts A_{G}. Ausgehend von dem Kerndurchmesser des Zylinderabschnitts A_{Z} weist der Konusabschnitt A_{K} einen Außenkonuswinkel k auf, der insbesondere dem Neigungswinkel der Haltenut 22g entspricht und insbesondere identisch ist mit dem Neigungswinkel n. Mit dem Halteelement 24g, das als Feinjustageschraube ausgeführt ist, ist eine Verstellung des Feilenelements 6g an dem Feilengrundkörper 2g entlang der Tiefenrichtung 16 mit einer Präzision von 1/1000 mm bis 5/10000 mm möglich.

Insbesondere durch die Verwendung der Gleitbuchsen 45 und der Passstifte 46 ist die Verstellung des Feilenelements 6g verbessert, da insbesondere die Gleitflächen zwischen Passstiften 46 und Gleitbuchsen 45 besser vor Staub und Spänen geschützt sind. Die Verlagerung ist exakter möglich, insbesondere mit einer höheren Auflösung. Eine horizontale Belastung der Halteelemente 24g und der entsprechenden Bohrungen in dem Feilengrundkörper 2g, insbesondere in Arbeitsrichtung, ist reduziert und insbesondere vernachlässigbar gering.

Fertigungs- und/oder Montagetoleranzen einzelner Bauteile können in der Bewegungsebene des Feilenhalteelements 35g gezielt ausgeglichen werden. Es wurde erkannt, dass Toleranzen im Bereich von 1/100 mm bis 3/100 mm bei der Fertigung des Bearbeitungsstegs 40 durch Drahterosion oder Feinfräsen und/oder durch eine ungleichmäßig dicke Beschichtung mit abrasiven Stoffen auftreten. Bei einem Wechsel des Feileneinsatzelements 36g kann eine Veränderung der Nullstellung der Justage erfordern, insbesondere bezüglich der Herstellung eines senkrecht zur Tiefenrichtung 16 ausgerichteten Bearbeitungsstegs 40 und bezüglich einer tiefsten Position des Bearbeitungsstegs 40 in Tiefenrichtung 16. Nachjustierungen können auch durch abriebbedingte Veränderung der Schichtdicke des abrasiven Materials des Bearbeitungsstegs 40 erforderlich werden. Die Nachjustierungen sind bei dem gezeigten Ausführungsbeispiel mit der kontrollierten Feilenhaltelement-Führung 42 in Tiefenrichtung 16 und insbesondere aufgrund des axial gelagerten, kippbaren Feileneinsatzelement-Aufnahme und der Feinjustage ermöglicht.

Dadurch, dass das Halteelement 24g einen Konusabschnitt A_{K} aufweist, ergibt sich in der Haltenut 22g kein Punktkontakt, sondern Linienkontakt. Die Pressung zwischen dem Halteelement 24g und der Haltenut 22g ist damit reduziert. Zwischen der Justierschraube als Halteelement 24g und der Justieröffnung als Haltenut 22g ergibt sich eine gleichmäßigere Belastung und Abnutzung.

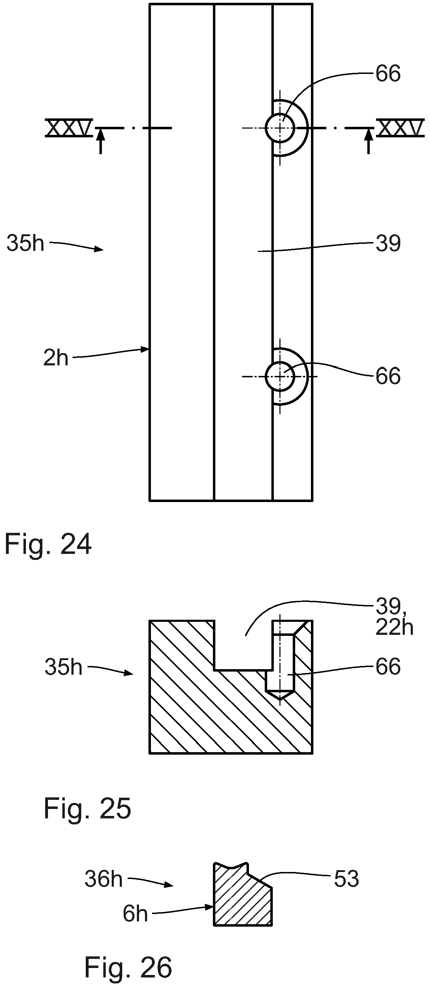

Nachfolgend wird anhand von Fig. 24 bis 26 ein weiteres Ausführungsbeispiel beschrieben. Konstruktiv identische Teile halten dieselben Bezugszeichen wie bei den vorherigen Ausführungsbeispielen, auf deren Beschreibung hiermit verwiesen wird. Konstruktiv unterschiedliche, jedoch funktionell gleichartige Teile halten dieselben Bezugszeichen mit einem nachgestellten h.

Gegenüber dem vorherigen Ausführungsbeispiel besteht eine Änderung darin, dass das Feilenhalteelement 35h einteilig ausgeführt ist.

Das Feileneinsatzelement 36h ist in die dafür vorgesehene Aussparung 39 in dem Feilenhalteelement 35h einsetzbar. Seitlich neben der Aussparung 39 sind zwei Gewindebohrungen 66 eingearbeitet, in die jeweils eine Halteschraube 37h eingeschraubt und an einem dafür vorgesehenen Absatz 53 an dem Feileneinsatzelement 36h angreifen kann. Das Feileneinsatzelement 36h ist mittels nicht dargestellter Halteschrauben an dem Feilenhaltelement 35h geklemmt. Die Befestigung und insbesondere auch das Lösen des Feileneinsatzelements 36h von dem Feilenhalteelement 35h ist unkompliziert. Ein Austausch des Feilenhalteelements 36h kann schnell und zeiteffizient durchgeführt werden.

Ein weiterer Unterschied besteht darin, dass das Feilenhalteelement 35h nur eine einzige Haltenut 22h aufweist, die insbesondere in Bearbeitungsrichtung mittig an dem Feilengrundkörper 2h bzw. dem Feilenhalteelement 35h angeordnet ist. Entsprechend ist eine gelenkige Lagerung des Feilenhalteelements 35h gemäß dem vorherigen Ausführungsbeispiel entbehrlich.

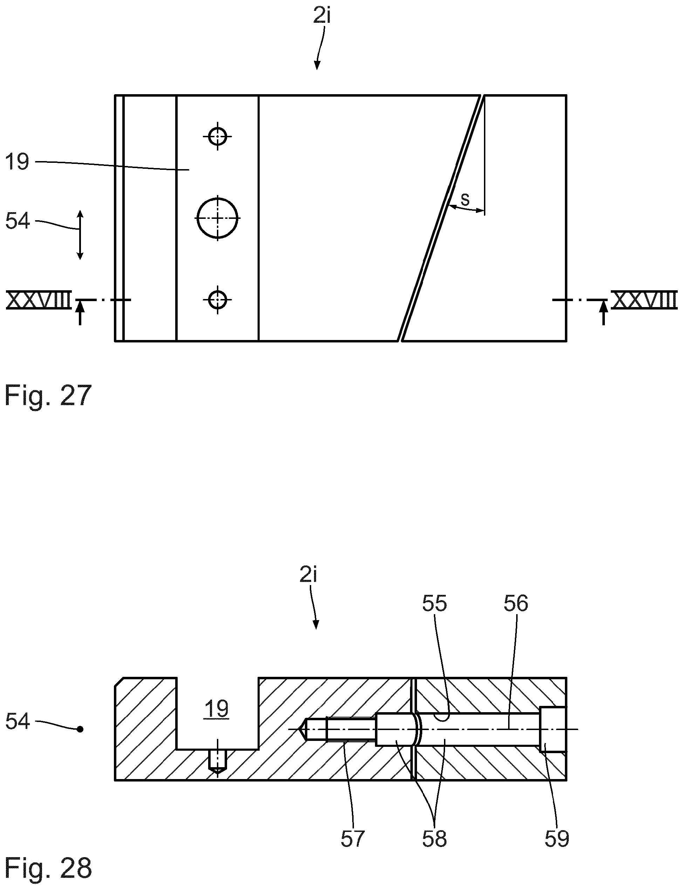

Im Folgenden wird unter Bezugnahme auf Fig. 27 und Fig. 28 ein weiteres Ausführungsbeispiel beschrieben. Konstruktiv identische Teile halten dieselben Bezugszeichen wie bei den vorherigen Ausführungsbeispielen, auf deren Beschreibung hiermit verwiesen wird. Konstruktiv unterschiedliche, jedoch funktionell gleichartige Teile halten dieselben Bezugszeichen mit einem nachgestellten i.

Bei der Feile ist der Feilengrundkörper 2i zweigeteilt ausgeführt, wobei ein erster Feilengrundkörper-Teil, in dem die Vertiefung 19 ausgebildet ist, und ein zweiter Feilengrundkörper-Teil derart angeordnet sind, dass ein geschlossener Feilengrundkörper 2i gebildet wird. Die Trennebene verläuft quer zu der Bearbeitungsrichtung 54 unter einem Schrägwinkel s, der insbesondere zwischen 1° und 45°, insbesondere zwischen 2° und 30° und insbesondere zwischen 5° und 15° beträgt. Die der Trennebene zugewandten Trennflächen des ersten Feilengrundkörper-Teils und des zweiten Feilengrundkörper-Teils korrespondieren miteinander. Die Trennflächen sind insbesondere jeweils eben ausgeführt und ermöglichen eine unkomplizierte Positionierung der Feilengrundkörper-Teile zueinander.

An einer Stirnseite des Feilengrundkörpers 2i sind zwei Querbohrungen 55 zur längenveränderlichen Ausführung des Feilengrundkörpers 2i angeordnet. Dazu weisen die Querbohrungen 55 jeweils entlang der Bohrlochlängsachse 56 einen innenliegenden Gewindeabschnitt 57, einen sich anschließenden Passabschnitt 58 sowie einen außenliegenden, zur Stirnseite hin geöffneten Aussparungsabschnitt 59 auf. Eine entsprechend gefertigte Passschraube kann in das Gewinde des Gewindeabschnitts 57 eingeschraubt werden und ermöglicht eine zuverlässige und genaue Verbindung der Feilenhalteelement-Teile zueinander insbesondere derart, dass die Trennflächen der Feilenhalteelement-Teile einander berühren. Es ist denkbar, zu dem ersten Feilengrundkörper-Teil verschiedene zweite Feilengrundkörper-Teile mit unterschiedlichen Längenabmessungen bereitzustellen, um unterschiedlich lang ausgeführte Feilengrundkörper 2i bilden zu können. Dadurch ist es möglich, den Feilengrundkörper mit unterschiedlichen Längenabmessungen veränderlich einzustellen.

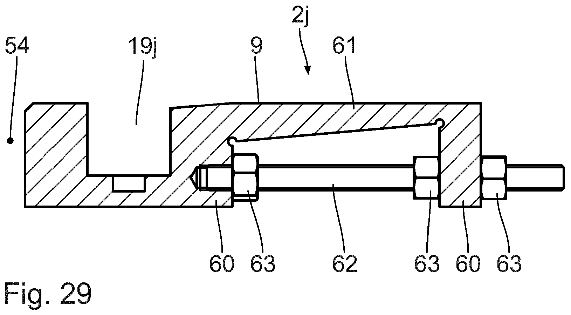

Im Folgenden wird unter Bezugnahme auf Fig. 29 ein weiteres Ausführungsbeispiel beschrieben. Konstruktiv identische Teile halten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten j.

Gegenüber dem vorherigen Ausführungsbeispiel ermöglicht der Feilengrundkörper 2j die gezielte Einstellung einer Deformation der nicht-abrasiven Gleitoberfläche 9, insbesondere in einem Bereich seitlich benachbart neben der Vertiefung 19j, in die ein Feilenhalteelement mit einem Feileneinsatzelement einsetzbar ist. Dadurch ist es möglich, den Feilengrundkörper 2j in einem Oberflächenbereich mit einer konvexen oder konkaven Krümmung auszuführen.

Dies wird insbesondere dadurch erreicht, dass der Feilengrundkörper 2j in einer Ebene, die senkrecht zur Bearbeitungsrichtung 54 orientiert ist, portalartig ausgeführt ist mit zwei gegenüberliegenden Stegwänden 60 und einer die Stegwände 60 verbindenden Deckenwand 61. An der Deckenwand 61 ist die Gleitoberfläche 9 angeordnet. An einer der Gleitoberfläche 9 gegenüberliegenden Unterseite der Deckenwand 61 können, insbesondere im Übergangsbereich zu den Stegwänden 60 Entlastungskerben angeordnet sein, um Spannungsspitzen im Feilengrundkörper 2j zu reduzieren und insbesondere zu vermeiden.

In einem unteren, der Deckenwand 61 beabstandeten Fußbereich sind die Stegwände 60 mittels eines Zug-/Druckelements 62, insbesondere in Form einer Gewindestange, mechanisch miteinander verbunden. Das Zug-/Druckelement 62 ist in einer Gewindeinnenbohrung an einem der Stegwände 60 festgelegt und durch ein zusätzliches Bewegungselement 63 in Form einer Mutter zusätzlich gehalten. Die Gewindebohrung ist als Sacklochbohrung ausgeführt.

An der gegenüberliegenden Stegwand 60, die eine Durchgangsöffnung aufweist, ist das Zug-/Druckelement durch die Durchgangsöffnung hindurch geführt und mit zwei Befestigungselementen 63, die gegenüberliegend an der Durchgangsöffnung angeordnet sind, festgelegt. Mit dem Zug-/Druckelement 62 können Zug- oder Druckkräfte auf die Stegwände 60 ausgeübt werden. Das Zug-/Druckelement 62 ermöglicht eine mechanische Kopplung der Stegwände 60. Wenn eine Zugkraft ausgeübt wird, entsteht eine konvexe Wölbung an der nicht-abrasiven Gleitoberfläche 9. Wenn eine Druckkraft auf die Stegwände 60 ausgeübt wird, bildet sich eine konkave Krümmung an der nicht-abrasiven Gleitoberfläche 9.

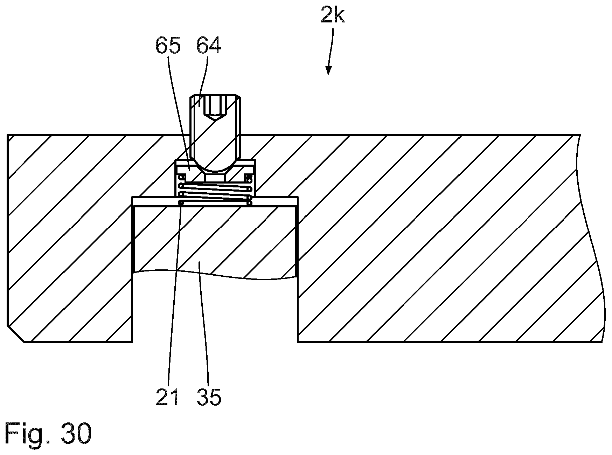

Im Folgenden wird unter Bezugnahme auf Fig. 30 ein weiteres Ausführungsbeispiel beschrieben. Konstruktiv identische Teile halten dieselbe Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten k.

Der Feilengrundkörper 2k weist ein Vorspannelement 64 auf, das als Bewegungsschraube in eine dafür vorgesehene Öffnung an einer Unterseite des Feilengrundkörpers 2k einschraubbar ist. Das Spannelement 64 wirkt mit einem Stellelement 65 in Form einer Lochscheibe zusammen, das an einer Unterseite der Druckfeder 21, also gegenüberliegend bezüglich des Feilenhalteelements 35 angeordnet ist. In Abhängigkeit der Einschraubtiefe des Spannelements 64 wird das Stellelement 65 verlagert und damit die Tiefe der Aussparung für die Druckfeder 21 reduziert, also die Vorspannung auf die Druckfeder 21 erhöht. Mit dem Spannelement 64 und dem Stellelement 65 ist es insbesondere möglich, die Vorspannung, die mit der Druckfeder 21 bereitgestellt werden kann, veränderlich einzustellen.

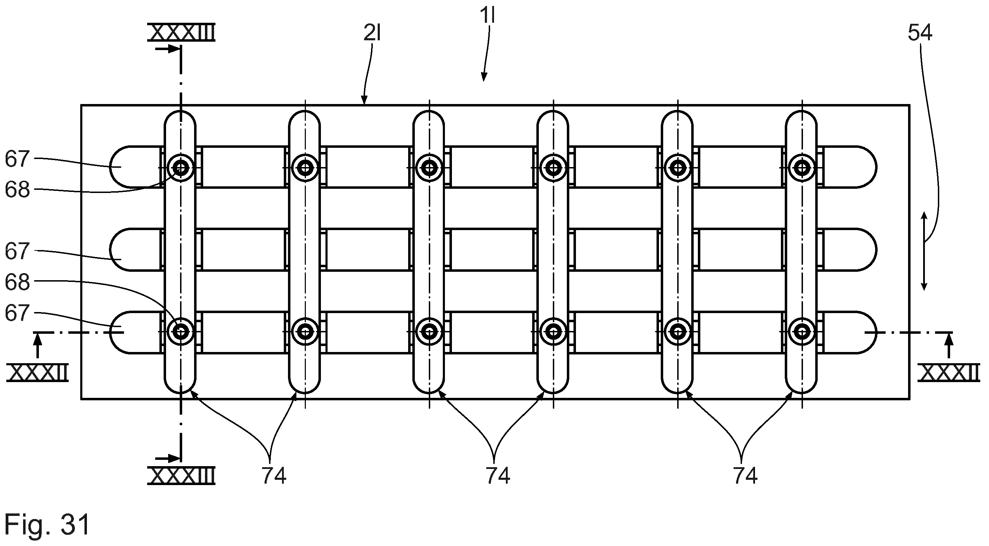

Im Folgenden wird unter Bezugnahme auf Fig. 31 bis 33 ein weiteres Ausführungsbeispiel beschrieben. Konstruktiv identische Teile halten dieselben Bezugszeichen wie bei den vorherigen Ausführungsbeispielen, auf deren Beschreibung hiermit verwiesen wird. Konstruktiv unterschiedliche, jedoch funktionell gleichartige Teile halten dieselben Bezugszeichen mit einem nachgestellten 1.

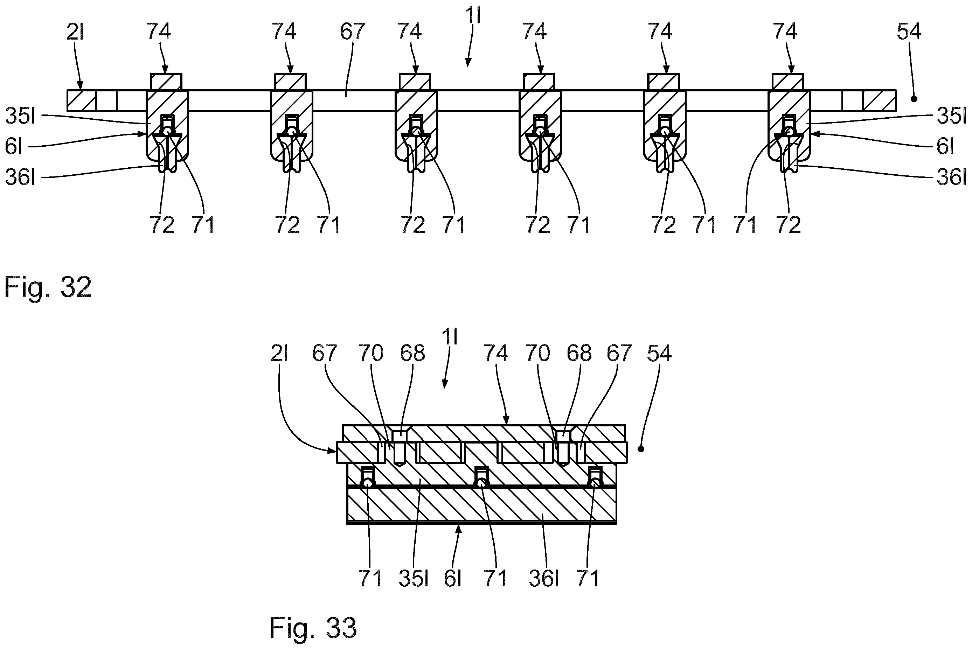

Der Feilengrundkörper 2l weist mindestens einen Führungsschlitz 67 auf, insbesondere mehrere Führungsschlitze 67 und insbesondere drei parallel orientierte Führungsschlitze 67, die zur Aufnahme der Feilenelemente 6l dienen. In Längsrichtung der Führungsschlitze 67 können Bundstababstands-Markierungen und/oder innenliegende Passstifte, die in korrespondierende Bohrungen oder Führungsbuchsen im Feilengrundkörper 21 angeordnet sind, vorhanden sein, die eine Positionierung der Feilenelemente 6l in definierten Abständen bezüglich der Längsrichtung vereinfachen. Insbesondere ist es dadurch möglich, die Feilenelemente 6l in Längsrichtung nebeneinander derart anzuordnen, dass simultan unterschiedliche Bundstäbe mit der Feile 11 bearbeitbar sind. Aus Darstellungsgründen sind die Feilenelemente 6l in Fig. 31 und 32 entlang der Längsschlitze 67 gleich beabstandet zueinander angeordnet dargestellt. Bei einer Anordnung der Feilenelemente 6l entsprechend der Mensur sind die Abstände zwischen zwei benachbarten Feilenelementen 6l entsprechend unterschiedlich. Um die Positionierung der Feilenelemente 6l zu erleichtern, können auch an den Feilenelementen 6l jeweils Markierungen vorhanden sein. Es versteht sich, dass an dem Feilengrundkörper 2l mehrere Markierungen, insbesondere für verschiedenartige Mensuren, ausgeführt sein können.

Die Feilenelemente 6l weisen jeweils ein Feilenhalteelement 351 und ein Feileneinsatzelement 361 auf.

Die Feile 11 ermöglicht eine gleichzeitige Bearbeitung mehrerer Bundstäbe an einem Instrument. Insbesondere können die Feilenelemente 6l an dem Feilengrundkörper 2l veränderlich zueinander festgelegt werden. Die Feilenelemente 61 sind jeweils mit dem Feilenhalteelement 351 über ein Widerlager 74 an dem Feilengrundkörper 2l geklemmt angeordnet. Jedes Feilenelement 6l weist an seinem Feilenhalteelement 351 in die Führungsschlitze 67 vorstehende Befestigungsstege 70 auf, in die jeweils zwei Klemmschrauben 68 eingreifen. An einer den Befestigungsstegen 70 gegenüberliegenden Unterseite ist an dem Feilenhalteelement 351 mindestens ein Federelement 71 angeordnet. Insbesondere sind zwei Federelemente 71 vorhanden und jeweils als federndes Druckstück, insbesondere in Form von Druckfederschrauben, ausgeführt mit einer Feder gelagerten Druckkugel, die in eine korrespondierende Vertiefung im Feileneinsatzelement 361 einrasten. Die Federelemente 71 können in die jeweilige Vertiefung eingepresst oder eingeschraubt sein. Die Federbewegung des Feileneinsatzelements 361 bleibt erhalten. Sein Herausgleiten aus dem Feilenhalteelement 351 ist über einen kombinierten Formschluss und Kraftschluss verhindert.

Alternativ ist es möglich, das Federelement 71 als Flachfeder auszuführen mit der das Feileneinsatzelement 36l am Feilenhalteelement 351 abgestützt ist. Die Flachfeder ist an einer, den Befestigungsstegen 70 gegenüberliegenden Unterseite befestigt, insbesondere geschraubt, genietet und/oder geschweißt, und kann in einer Ebene senkrecht zur Längsrichtung der Führungsschlitze 67 eine wellenförmige Kontur aufweisen. Die Kontur ragt an mindestens einer Stelle in eine korrespondierende Vertiefung im Feileneinsatzelement 36l, sodass ein korrespondierender Formschluss für das Federelement erfüllt ist.

Mit dem Federelement 71 wird auf die Feileneinsatzelemente 361 eine Klemmkraft ausgeübt, die die Feileneinsatzelemente 36l formschlüssig und kraftschlüssig im Feilenhalteelement 351 hält.

Vorteilhaft ist es, wenn der Feilengrundkörper 2l eine ausreichende Flexibilität hat, insbesondere parallel zur Längsseite eines Griffbretts, also senkrecht zur Bearbeitungsrichtung. Insbesondere ist es dadurch möglich, den Feilengrundkörper 2l an einen unebenen Instrumentenhals anzupassen.

Die Feileneinsatzelemente 36l sind insbesondere analog dem Feilenelement des ersten Ausführungsbeispiels ausgeführt. Insbesondere ist die Tiefenstoppfunktion dieser Feilenelemente 6l nicht auf benachbarte Bundstabniveaus angewiesen, sondern orientiert sich ausschließlich an dem Niveau des zu bearbeitenden Bundstabes, also unmittelbar. Eine Feinjustage der Feilenelemente 61 an dem Feilengrundkörper 2l ist bei der Feile 11 entbehrlich. Insbesondere können Höhenunterschiede der nicht-abrasiven Scheitellinien durch das Einfedern der Feileneinsatzelemente 361 mittels der Federelemente 71 ausgeglichen werden. Die Höhenunterschiede können durch Fertigungstoleranzen und/oder durch unterschiedliche Abtragsleistungen an verschiedenen Bundstäben während ihrer simultanen Bearbeitung bedingt sein.

Die mit einem Schwalbenschwanz versehenen Feileneinsatzelemente 361 sind insbesondere mittels einer korrespondierenden Schwalbenschwanz-Führung 72 innerhalb der Feilenhalteelemente 351 entlang der Bearbeitungsrichtung 54 geführt.

Unzulässige Verschiebungen der Feileneinsatzelemente 361 entlang der Bearbeitungsrichtung 54 können auch durch nicht dargestellte, entlang der Bearbeitungsrichtung 54 des Feilengrundkörpers 2l vorne und hinten am Feilengrundkörper 2l und/oder am Feilenhalteelement 351 angeordnete mechanische Anschlagelemente verhindert werden. Insbesondere sind feste Anschlagelemente vorhanden. Insbesondere ist das entfernbare Anschlagelement an dem Feilengrundkörper 21 und/oder am Feilenhalteelement 351 befestigt. Zusätzlich oder alternativ können Vertiefungen im Feileneinsatzelement 361 vorhanden sein, die ein Einrasten des Federelements 71 ermöglichen.

Die Anschlagelemente sind insbesondere als Flachkopfschrauben ausgeführt, deren Köpfe einseitig zu etwa einem Drittel des Kopfdurchmessers gerade abgeschliffen sind und insbesondere mit dem runden Teil des Flachkopfes ein Herausziehen oder Herausdrücken des Feileneinsatzelements 361 verhindern. Um Federbewegungen des Feileneinsatzelements 36l nicht zu behindern, können die Schraubenkopfunterseiten in dieser Position jeweils einen Abstand von etwa 0,1 mm bis 0,2 mm zum Feileneinsatzelement 36l aufweisen.

## Patentansprüche

1. Feile (1; 1a; 1b; 1c; 1d) zur Erzeugung einer unebenen Kontur, insbesondere mit einer Querkrümmung an einem Werkstück (11), wobei die Feile (1; 1a; 1b; 1c; 1d)
a. eine Längsachse (3),
b. mindestens ein Feilenelement (5, 6; 5a, 6a; 5b; 5c; 5d) mit einer abrasiven Bearbeitungsoberfläche (8),
c. ein Tiefenstoppelement (7; 7a; 7b; 7c; 7d) mit einer nicht-abrasiven Gleitoberfläche (9) aufweist,
wobei das mindestens eine Feilenelement (5, 6; 5a, 6a; 5b; 5c; 5d) und das Tiefenstoppelement (7; 7a; 7b; 7c; 7d) in einer zur Längsachse (3) senkrecht orientierten Ebene nebeneinander angeordnet sind,
wobei das Tiefenstoppelement (7a; 7b; 7c; 7d) einen Feilengrundkörper (2a; 2b; 2c; 2d) bildet, an dem mindestens eine Vertiefung (19; 19d) zum Einsetzen des mindestens einen Feilenelements (5a, 6a; 5b; 5c; 5d) angeordnet ist, **dadurch gekennzeichnet, dass**
- das mindestens eine Feilenelement (5a, 6a) in Tiefenrichtung (16) mechanisch vorgespannt am Feilengrundkörper (2a) angeordnet ist und/oder
- das mindestens eine Feilenelement (5a, 6a; 5b) in Tiefenrichtung (16) verstellbar am Feilengrundkörper (2a; 2b) angeordnet ist.

2. Feile (1; 1a; 1b; 1c; 1d) gemäß Anspruch 1, **dadurch gekennzeichnet, dass** das mindestens eine Feilenelement (5, 6; 5a, 6a; 5b; 5c; 5d) und das Tiefenstoppelement (7; 7a; 7b; 7c; 7d), insbesondere jeweils paarweise, miteinander verbunden sind.

3. Feile (1; 1a; 1b; 1c; 1d) gemäß einem der vorstehenden Ansprüche, **dadurch gekennzeichnet, dass** die abrasive Bearbeitungsoberfläche (8) konkav ausgeführt ist und insbesondere eine Krümmung mit einem Krümmungsradius (R_{F}) aufweist, der insbesondere größer ist, als ein originaler Krümmungsradius (R_{W}) des Werkstücks (11).

4. Feile (1; 1a; 1b; 1c; 1d) gemäß einem der vorstehenden Ansprüche, **dadurch gekennzeichnet, dass** das mindestens eine Feilenelement (5, 6; 5a, 6a; 5b; 5c; 5d) entlang der Längsachse (3) profilartig ausgeführt ist.

5. Feile (1; 1a; 1b; 1c; 1d) gemäß einem der vorstehenden Ansprüche, **dadurch gekennzeichnet, dass** die Kontur der Bearbeitungsoberfläche (8) und/oder der Gleitoberfläche (9) entlang der Längsachse (3) konstant ist.

6. Feile (1; 1a; 1b; 1c; 1d) gemäß einem der vorstehenden Ansprüche, **gekennzeichnet durch** ein Halteelement (24; 24c; 24d) zum Halten des mindestens einen Feilenelements (5a, 6a; 5b; 5c; 5d), insbesondere in der mindestens einen Vertiefung (19; 19d).

7. Feile (1; 1a; 1b; 1c; 1d) gemäß einem der vorstehenden Ansprüche, **dadurch gekennzeichnet, dass** das mindestens eine Feilenelement (5a, 6a; 5b; 5c; 5d) eine Justagenut (22; 22c) aufweist, insbesondere zum haltenden Eingreifen des Halteelements (24; 24c; 24d), wobei die Justagenut (22; 22c) insbesondere entlang der Tiefenrichtung (16) der Feile (1; 1a; 1b; 1c; 1d) verläuft.

8. Feile (1; 1a; 1b; 1c; 1d) gemäß Anspruch 7, **dadurch gekennzeichnet, dass** die Justagenut (22; 22c) in Tiefenrichtung (16) der Feile (1; 1a; 1b; 1c; 1d) eine veränderliche Nuttiefe (T_{N}) aufweist.

9. Feile (1; 1a; 1b; 1c; 1d) gemäß Anspruch 7 oder 8, **dadurch gekennzeichnet, dass** die Justagenut (22; 22c) in einer Ebene senkrecht zur Tiefenrichtung (16) ein V-förmiges Nutprofil aufweist.

10. Feile (1; 1a; 1b; 1c; 1d) gemäß einem der vorstehenden Ansprüche , **dadurch gekennzeichnet, dass** das mindestens eine Feilenelement (5a, 6a; 5b; 5c; 5d) derart am Feilengrundkörper (2a; 2b; 2c; 2d) angeordnet ist, dass ein Tiefpunkt (M) der Bearbeitungsoberfläche (8) in einer von der Gleitoberfläche (9) definierten Ebene (17, 18) liegt oder mit einem senkrechten Abstand in Tiefenrichtung (16) gegenüber der Ebene (17, 18)
zurückversetzt ist, wobei der Abstand insbesondere kleiner als 1,0 mm, insbesondere kleiner als 0,7 mm, insbesondere kleiner als 0,5 mm, insbesondere kleiner als 0,3 mm, insbesondere kleiner als 0,1 mm, und insbesondere größer oder gleich 0,001 mm ist.

11. Feile (1; 1a; 1b; 1c; 1d) gemäß einem der vorstehenden Ansprüche, **dadurch gekennzeichnet, dass** das mindestens eine Feilenelement (5a, 6a) mittels einer Druckfeder (21) am Feilengrundkörper (2a) angeordnet ist.

12. Feile (1; 1a; 1b; 1c; 1d) gemäß einem der vorstehenden Ansprüche, **dadurch gekennzeichnet, dass** das mindestens eine Feilenelement (5a, 6a; 5b) in Tiefenrichtung (16) mittels eines Bewegungsgewindes, insbesondere mittels eines Bewegungsfeingewindes am Feilengrundkörper (2a; 2b) verstellbar angeordnet ist.

13. Feile (1; 1a; 1b; 1c; 1d) gemäß einem der vorstehenden Ansprüche, **dadurch gekennzeichnet, dass** das mindestens eine Feilenelement (6e; 6f) mehrteilig ausgeführt ist und insbesondere ein Feilenhalteelement (35) und ein von dem Feilenhaltelement (35) gehaltenes Feileneinsatzelement (36) umfasst.

## Claims

1. A file (1; 1a; 1b; 1c; 1d) for creating a non-planar contour, in particular with a transverse curvature, on a workpiece (11), wherein the file (1; 1a; 1b; 1c; 1d) comprises
a. a longitudinal axis (3),
b. at least one file element (5, 6; 5a, 6a; 5b; 5c; 5d) with an abrasive machining surface (8),
c. a depth stop element (7; 7a; 7b; 7c; 7d) with a non-abrasive sliding surface (9),
wherein the at least one file element (5, 6; 5a, 6a; 5b; 5c; 5d) and the depth stop element (7; 7a; 7b; 7c; 7d) are arranged next to one another in a plane orientated perpendicular to the longitudinal axis (3),
wherein the depth-stop element (7a; 7b; 7c; 7d) forms a file base body (2a; 2b; 2c; 2d) on which at least one recess (19; 19d) for inserting the at least one file element (5a, 6a; 5b; 5c; 5d) is arranged, **characterized in that**
- the at least one file element (5a, 6a) is arranged to be mechanically preloaded in the depth direction (16) on the file base body (2a), and/or
- the at least one file element (5a, 6a; 5b) is arranged on the file base body (2a; 2b) so as to be adjustable in the depth direction (16).

2. A file (1; 1a; 1b; 1c; 1d) according to claim 1, **characterized in that** the at least one file element (5, 6; 5a, 6a; 5b; 5c; 5d) and the depth stop element (7; 7a; 7b; 7c; 7d) are connected to each other, in particular in pairs.

3. A file (1; 1a; 1b; 1c; 1d) according to any one of the preceding claims, **characterized in that** the abrasive machining surface (8) is designed to be concave and in particular has a curvature with a radius of curvature (R_{F}) which is in particular greater than an original radius of curvature (R_{W}) of the workpiece (11).

4. A file (1; 1a; 1b; 1c; 1d) according to any one of the preceding claims, **characterized in that** the at least one file element (5, 6; 5a, 6a; 5b; 5c; 5d) is profiled along the longitudinal axis (3).

5. A file (1; 1a; 1b; 1c; 1d) according to any one of the preceding claims, **characterized in that** the contour of the machining surface (8) and/or the sliding surface (9) is constant along the longitudinal axis (3).

6. A file (1; 1a; 1b; 1c; 1d) according to one of the preceding claims, **characterized by** a holding element (24; 24c; 24d) for holding the at least one file element (5a, 6a; 5b; 5c; 5d), in particular in the at least one recess (19; 19d).

7. A file (1; 1a; 1b; 1c; 1d) according to one of the preceding claims, **characterized in that** the at least one file element (5a, 6a; 5b; 5c; 5d) has an adjustment groove (22; 22c), in particular for holding engagement of the holding element (24; 24c; 24d), wherein the adjustment groove (22; 22c) extends in particular along the depth direction (16) of the file (1; 1a; 1b; 1c; 1d).

8. A file (1; 1a; 1b; 1c; 1d) according to claim 7, **characterized in that** the adjustment groove (22; 22c) has a variable groove depth (T_{N}) in the depth direction (16) of the file (1; 1a; 1b; 1c; 1d).

9. A file (1; 1a; 1b; 1c; 1d) according to claim 7 or 8, **characterized in that** the adjustment groove (22; 22c) has a V-shaped groove profile in a plane perpendicular to the depth direction (16).

10. A file (1; 1a; 1b; 1c; 1d) according to one of the preceding claims, **characterized in that** the at least one file element (5a, 6a; 5b; 5c; 5d) is arranged on the file base body (2a; 2b; 2c; 2d) in such a manner that a minimum turning point (M) of the machining surface (8) lies in a plane (17, 18) defined by the sliding surface (9) or is set back from the plane (17, 18) by a vertical distance in the depth direction (16), wherein the distance is in particular less than 1.0 mm, in particular less than 0.7 mm, in particular less than 0.5 mm, in particular less than 0.3 mm, in particular less than 0.1 mm, and in particular greater than or equal to 0.001 mm.

11. A file (1; 1a; 1b; 1c; 1d) according to one of the preceding claims, **characterized in that** the at least one file element (5a, 6a) is arranged on the file base body (2a) by means of a compression spring (21).

12. A file (1; 1a; 1b; 1c; 1d) according to one of the preceding claims, **characterized in that** the at least one file element (5a, 6a; 5b) is arranged on the file base body (2a; 2b) so as to be adjustable in the depth direction (16) by means of a translation thread, in particular by means of a translation fine thread.

13. A file (1; 1a; 1b; 1c; 1d) according to any one of the preceding claims, **characterized in that** the at least one file element (6e; 6f) is designed in multiple pieces and in particular comprises a file holding element (35) and a file insert element (36) held by the file holding element (35).

## Revendications

1. Lime (1 ; 1a ; 1b ; 1c ; 1d) destinée à créer un contour inégal, en particulier avec une courbure transversale sur une pièce à usiner (11), la lime (1 ; 1a ; 1b ; 1c ; 1d) présentant :
a. un axe longitudinal (3),
b. au moins un élément de lime (5, 6 ; 5a, 6a ; 5b ; 5c ; 5d) avec une surface d'usinage abrasive (8),
c. un élément d'arrêt en profondeur (7 ; 7a ; 7b ; 7c ; 7d) avec une surface de glissement non abrasive (9),
dans laquelle ledit au moins un élément de lime (5, 6 ; 5a, 6a ; 5b ; 5c ; 5d) et l'élément d'arrêt en profondeur (7 ; 7a ; 7b ; 7c ; 7d) sont disposés l'un à côté de l'autre dans un plan orienté perpendiculairement à l'axe longitudinal (3),
dans laquelle l'élément d'arrêt en profondeur (7a ; 7b ; 7c ; 7d) forme un corps de base de lime (2a ; 2b ; 2c ; 2d) sur lequel est disposé au moins un renfoncement (19 ; 19d) pour l'insertion dudit au moins un élément de lime (5a, 6a ; 5b ; 5c ; 5d),
**caractérisée en ce que**
- ledit au moins un élément de lime (5a, 6a) est disposé sur le corps de base de lime (2a) avec une précontrainte mécanique dans la direction de profondeur (16) et/ou
- ledit au moins un élément de lime (5a, 6a ; 5b) est disposé de manière réglable dans la direction de profondeur (16) sur le corps de base de lime (2a ; 2b).

2. Lime (1 ; 1a ; 1b ; 1c ; 1d) selon la revendication 1, **caractérisée en ce que** ledit au moins un élément de lime (5, 6 ; 5a, 6a ; 5b ; 5c ; 5d) et l'élément d'arrêt en profondeur (7 ; 7a ; 7b ; 7c ; 7d) sont reliés entre eux, en particulier chaque fois par paires.

3. Lime (1 ; 1a ; 1b ; 1e ; 1d) selon l'une des revendications précédentes, **caractérisée en ce que** la surface d'usinage abrasive (8) est concave et présente en particulier une courbure avec un rayon de courbure (R_{F}) qui est en particulier supérieur à un rayon de courbure d'origine (R_{W}) de la pièce à usiner (11).

4. Lime (1 ; 1a ; 1b ; 1c ; 1d) selon l'une des revendications précédentes, **caractérisée en ce que** ledit au moins un élément de lime (5, 6 ; 5a, 6a ; 5b ; 5c ; 5d) est réalisé de manière profilée le long de l'axe longitudinal (3).

5. Lime (1 ; 1a ; 1b ; 1c ; 1d) selon l'une des revendications précédentes, **caractérisée en ce que** le contour de la surface d'usinage (8) et/ou de la surface de glissement (9) est constant le long de l'axe longitudinal (3).

6. Lime (1 ; 1a ; 1b ; 1c ; 1d) selon l'une des revendications précédentes, **caractérisée par** un élément de maintien (24 ; 24c ; 24d) pour maintenir ledit au moins un élément de lime (5a, 6a ; 5b ; 5c ; 5d), en particulier dans ledit au moins un renfoncement (19 ; 19d).

7. Lime (1 ; 1a ; 1b ; 1c ; 1d) selon l'une des revendications précédentes, **caractérisée en ce que** ledit au moins un élément de lime (5a, 6a ; 5b ; 5c ; 5d) présente une rainure d'ajustement (22 ; 22c), en particulier pour l'engagement de maintien de l'élément de maintien (24 ; 24c ; 24d), la rainure d'ajustement (22 ; 22c) s'étendant en particulier le long de la direction de profondeur (16) de la lime (1 ; 1a ; 1b ; 1c ; 1d).

8. Lime (1 ; 1a ; 1b ; 1c ; 1d) selon la revendication 7, **caractérisée en ce que** la rainure d'ajustement (22 ; 22c) présente une profondeur de rainure variable (T_{N}) dans la direction de profondeur (16) de la lime (1 ; 1a ; 1b ; 1c ; 1d).

9. Lime (1 ; 1a ; 1b ; 1c ; 1d) selon la revendication 7 ou 8, **caractérisée en ce que** la rainure d'ajustement (22 ; 22c) présente un profil de rainure en V dans un plan perpendiculaire à la direction de profondeur (16).

10. Lime (1 ; 1a ; 1b ; 1c ; 1d) selon l'une des revendications précédentes , **caractérisée en ce que** ledit au moins un élément de lime (5a, 6a ; 5b ; 5c ; 5d) est disposé sur le corps de base de lime (2a ; 2b ; 2c ; 2d) de telle sorte qu'un point bas (M) de la surface d'usinage (8) se trouve dans un plan (17, 18) défini par la surface de glissement (9) ou est en retrait par rapport au plan (17, 18) d'une distance perpendiculaire dans la direction de profondeur (16), la distance étant en particulier inférieure à 1,0 mm, en particulier inférieure à 0,7 mm, en particulier inférieure à 0,5 mm, en particulier inférieure à 0,3 mm, en particulier inférieure à 0,1 mm, et en particulier supérieure ou égale à 0,001 mm.

11. Lime (1 ; 1a ; 1b ; 1c ; 1d) selon l'une des revendications précédentes, **caractérisée en ce que** ledit au moins un élément de lime (5a, 6a) est disposé sur le corps de base de lime (2a) au moyen d'un ressort de pression (21).

12. Lime (1 ; 1a ; 1b ; 1c ; 1d) selon l'une des revendications précédentes, **caractérisée en ce que** ledit au moins un élément de lime (5a, 6a ; 5b) est disposé de manière réglable dans la direction de profondeur (16) au moyen d'un filetage de déplacement, en particulier au moyen d'un filetage de déplacement à pas fin, sur le corps de base de lime (2a ; 2b).

13. Lime (1 ; 1a ; 1b ; 1c ; 1d) selon l'une des revendications précédentes, **caractérisée en ce que** ledit au moins un élément de lime (6e ; 6f) est réalisé en plusieurs parties et comprend en particulier un élément de maintien de lime (35) et un élément d'insertion de lime (36) maintenu par l'élément de maintien de lime (35).
